(19) Europäisches Patentamt
European Patent Office
Office européen des brevets

(11) **EP 4 006 086 B1**

(12) **EUROPEAN PATENT SPECIFICATION**

(45) Date of publication and mention of the grant of the patent:
**03.06.2026 Bulletin 2026/23**

(21) Application number: **20847354.6**

(22) Date of filing: **27.07.2020**

(51) International Patent Classification (IPC):
***C08J 5/04*** *(2006.01)* ***C08G 75/029*** *(2016.01)*
***C08L 81/02*** *(2006.01)*

(52) Cooperative Patent Classification (CPC):
(C-Sets available)
**C08G 75/0204; C08G 75/02; C08G 75/029; C08J 5/042; C08J 5/043; C08K 7/02; C08L 81/02;**
C08J 2365/00; C08K 3/04 (Cont.)

(86) International application number:
**PCT/JP2020/028659**

(87) International publication number:
**WO 2021/020334 (04.02.2021 Gazette 2021/05)**

(54) **FIBER-REINFORCED POLYARYLENE SULFIDE COPOLYMER COMPOSITE SUBSTRATE, METHOD FOR MANUFACTURING SAME, AND MOLDED ARTICLE INCLUDING SAME**

FASERVERSTÄRKTES POLYARYLENSULFID-COPOLYMER-VERBUNDSUBSTRAT, VERFAHREN ZU SEINER HERSTELLUNG UND DARAUS HERGESTELLTER FORMKÖRPER

SUBSTRAT COMPOSITE DE COPOLYMÈRE DE POLY(SULFURE D’ARYLÈNE) RENFORCÉ DE FIBRES, SON PROCÉDÉ DE FABRICATION, ET ARTICLE MOULÉ LE COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.07.2019 JP 2019140543**

(43) Date of publication of application:
**01.06.2022 Bulletin 2022/22**

(73) Proprietor: **Toray Industries, Inc.**
**Tokyo 103-8666 (JP)**

(72) Inventors:
- **MIYABARA, Yuichiro**
  **Nagoya-shi, Aichi 455-8502 (JP)**
- **UNOHARA, Takeshi**
  **Nagoya-shi, Aichi 455-8502 (JP)**

(74) Representative: **Mewburn Ellis LLP**
**Aurora Building**
**Counterslip**
**Bristol BS1 6BX (GB)**

(56) References cited:
**EP-A1- 3 050 928**
**EP-A2- 0 213 573**
**JP-A- 2013 006 960**
**JP-A- 2014 095 034**
**JP-A- 2016 222 851**
**JP-A- 2016 222 851**
**JP-A- 2017 179 102**
**JP-A- H 059 299**
**JP-A- H 059 299**
**US-A- 4 365 037**
**US-A- 4 716 216**
**US-A- 4 769 424**
**US-A1- 2013 069 001**
**US-A1- 2019 000 057**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 7/02, C08L 81/02**

## Description

### Technical Field

The present invention relates to fiber-reinforced polyarylene sulfide copolymer composite base materials, methods of manufacturing the same, and molded articles including the same.

### Background Art

Polyarylene sulfide (hereinafter abbreviated as "PAS"), represented by polyphenylene sulfide (hereinafter abbreviated as "PPS"), has excellent properties suitable as engineering plastics, such as heat resistance, barrier properties, moldability, chemical resistance, electrical insulation, and moist heat resistance, and is used in various parts such as electrical and electronic parts, machine parts, and automotive parts.

In the various applications, PAS is generally used as a PAS resin composition obtained by melting and mixing PAS with fillers such as glass fiber and additives in order to enhance the mechanical properties while taking advantage of excellent properties of PAS. There are known methods to develop higher mechanical properties, including injection molding of pellets obtained by impregnating a continuous reinforcing fiber with PAS to obtain a molded article, and impregnating a continuous reinforcing fiber with PAS to obtain a base material. Also known are methods of impregnating a reinforcing fiber base material with discontinuous reinforcing fibers dispersed therein with PAS.

On the other hand, the glass transition temperature of PPS, a representative PAS, is usually from 80 to 90°C, and thus even the methods to develop high mechanical properties as described above may have resulted in significantly reduced rigidity in such environments that PPS is exposed to higher temperature than the glass transition temperature. Various studies have been conducted to increase the glass transition temperature of PAS. For example, in Patent Document 1, the glass transition temperature of PAS is increased by polymerizing a sulfoxide compound monomer having a biphenyl structure to obtain poly(arylene sulfonium salt), and dealkylating or dearylating it to introduce a rigid biphenyl structure into the main chain backbone. In addition, Patent Document 2 discloses a block copolymer having a polyphenylene sulfide moiety and a polyphenylene sulfide ketone moiety. Patent Document 3 discloses a method of producing a PAS-based copolymer, comprising depolymerizing PPS in a solvent using a sulfurizing agent, and then reacting and polymerizing the depolymerized product with a dihalogenated compound having a ketone group. Patent Document 4 discloses a crystalline polyimide containing a cumulative phenylene sulfide unit with its glass transition temperature increased by linking dimers to nonamers of phenylene sulfide and arylene groups via imide bonds. Patent Document 5 discloses a block copolymer having PAS and imide groups in the molecular chain, obtained by reacting PAS and a compound having an acid anhydride structure. Patent Documents 6 to 9 disclose polyarylene sulfide containing compositions.

### Citation List

#### Patent Literature

[Patent Document 1] JP 2017-132839 A (Claims)
[Patent Document 2] JP H2-133428 A (Claims)
[Patent Document 3] JP H5-98007 A (Claims)
[Patent Document 4] JP S62-84124 A (Claims)
[Patent Document 5] JP S64-45433 A (Claims)
[Patent Document 6] JP 2016 225851 A
[Patent Document 7] EP 0 213 573 A2
[Patent Document 8] US 4 769 424 A
[Patent Document 9] US 4 716 216 A

### Summary of Invention

### Technical Problem

Various studies have been conducted to increase the glass transition temperature of PAS. However, the method disclosed in Patent Document 1 has surely achieved increased glass transition temperature, but the melting point has been raised to 335°C or higher, making it difficult to perform melt processing. Similarly, the block copolymer disclosed in

Patent Document 2 has also had a too high melting point causing problems in the moldability. The PAS-based copolymer obtained in the method disclosed in Patent Document 3 has had an increased glass transition temperature, but also had an increased melting point, which makes it difficult to perform melt processing. The method disclosed in Patent Document 4 has resulted in increased glass transition temperature, but in degraded chemical resistance that is a characteristic of PAS. Patent Document 5 has provided a block copolymer having high glass transition temperature, but it has been a copolymer that is soluble in solvents, leading to poor chemical resistance.

An object of the present invention is to provide a fiber-reinforced polyarylene sulfide copolymer composite base material having chemical resistance of PAS, while having high workability during molding of molded articles from the composite base material and increased rigidity at high temperature, and a molded article comprising the composite base material.

Solution to Problem

In order to solve the above-described problems, the fiber-reinforced polyarylene sulfide copolymer composite base material in the present invention comprises:

a continuous reinforcing fiber, or a reinforcing fiber base material with discontinuous reinforcing fibers dispersed therein; and
a polyarylene sulfide copolymer impregnated into the continuous reinforcing fiber or the reinforcing fiber base material;
wherein a glass transition temperature of the polyarylene sulfide copolymer is from 95°C to 190°C, wherein the polyarylene sulfide copolymer comprises arylene sulfide units having a number average molecular weight (Mn) of from 1,000 to 10,000, wherein an amount of the arylene sulfide unit contained in the polyarylene sulfide copolymer is 50% by weight or more, the polyarylene sulfide copolymer having at least one amide or imide linking group;

wherein the polyarylene sulfide copolymer is prepared by a method comprising:

(i) adding a sulfide compound having a reactive functional group to polyphenylene sulfide and heating the mixture to form an arylene sulfide prepolymer (A) having an amino group; and (ii) mixing the arylene sulfide prepolymer (A) with a compound constituting the structural unit of the copolymer (B), and heating to obtain a polyarylene sulfide copolymer having an amide or an imide linking group, wherein the compound constituting the structural unit of the copolymer (B) is at least one or more compounds selected from the following formulae (a') to (k'):

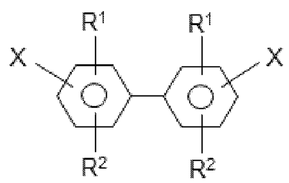
...(a')

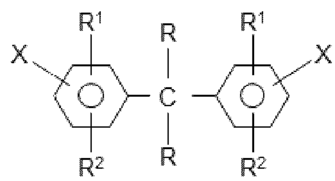
...(b')

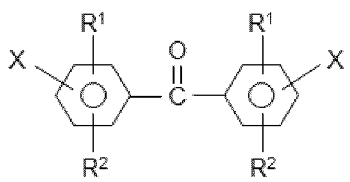
...(c')

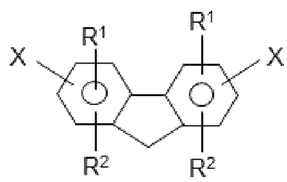
...(d')

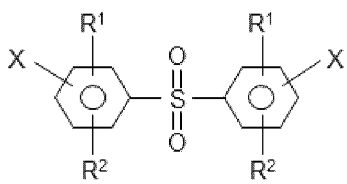
...(e')

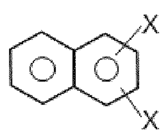
...(f')

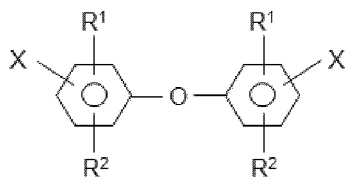 ...(g')

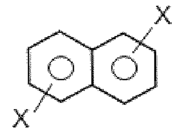 ...(h')

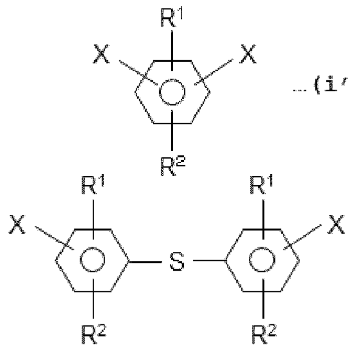 ...(i')

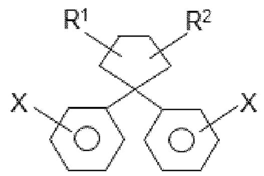 ...(j')

...(k')

,

wherein in the formulae, X is any one selected from hydroxyl, carboxyl, silanol, sulfo, amino, acid anhydride, acetamide, sulfonamide, cyano, isocyanate, aldehyde, acetyl, epoxy, and alkoxy silane; the aromatic ring in the compounds represented by the formulae (a') to (k') may be a bi- or tri-substituted group, and the two or more substituents X in a single substituted aromatic ring may be the same or different; R, $R^1$ and $R^2$, which are the same or different, each represent a substituent selected from hydrogen, $C_{1-12}$ alkyl, $C_{6-24}$ aryl, and halogen.

The method of manufacturing the fiber-reinforced polyarylene sulfide copolymer composite base material in the present invention comprises:

melting a polyarylene sulfide copolymer; and
impregnating a continuous reinforcing fiber or a reinforcing fiber base material with discontinuous reinforcing fibers dispersed therein, with the molten polyarylene sulfide copolymer.

The molded article in the present invention comprises:
a fiber-reinforced polyarylene sulfide copolymer composite base material according to the present invention.

In the present invention, the fiber-reinforced polyarylene sulfide copolymer composite base material preferably comprises a polyarylene sulfide copolymer having a melting point of 300°C or lower or no melting point.

In the present invention, the fiber-reinforced polyarylene sulfide copolymer composite base material comprises a polyarylene sulfide copolymer comprising arylene sulfide units having a number average molecular weight (Mn) of from 1,000 to 10,000; and
wherein the amount of the arylene sulfide units contained in the polyarylene sulfide copolymer is 50% by weight or more.

In the present invention, the fiber-reinforced polyarylene sulfide copolymer composite base material preferably comprises a polyarylene sulfide copolymer having at least one structure selected from the following formulae (a) to (j):

[Chem 1]

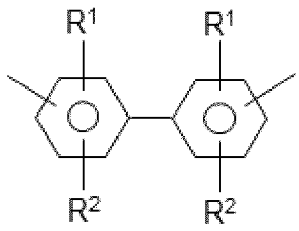

... (a)

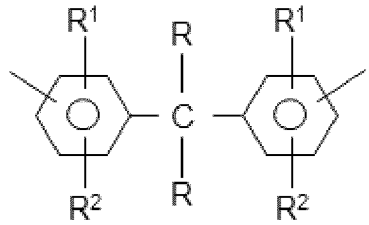

... (b)

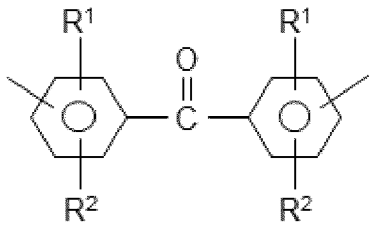

... (c)

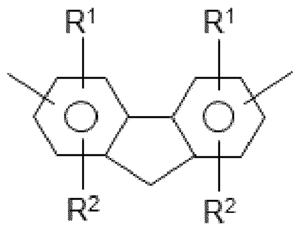

... (d)

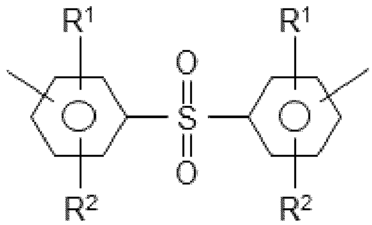

... (e)

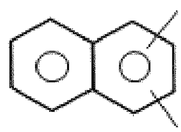

... (f)

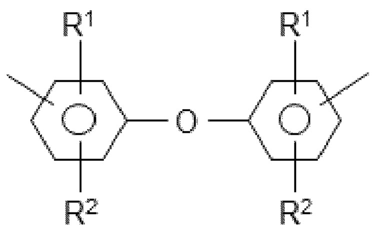

... (g)

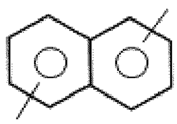

... (h)

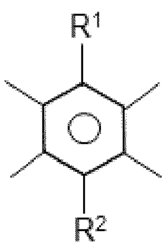

... (i)

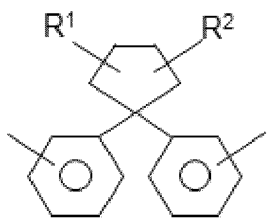

... (j)

wherein,

R, $R^1$ and $R^2$, which are the same or different, each represent a substituent selected from hydrogen, $C_{1-12}$ alkyl, $C_{6-24}$ aryl, and halogen.

In the present invention, the fiber-reinforced polyarylene sulfide copolymer composite base material comprises a polyarylene sulfide copolymer has at least one linking group selected from amide and imide.

In the present invention, the fiber-reinforced polyarylene sulfide copolymer composite base material preferably comprises a reinforcing fiber that is continuously arranged in one direction, or is a discontinuous fiber with a number-average fiber length of from 3 to 100 mm.

In the present invention, the fiber-reinforced polyarylene sulfide copolymer composite base material preferably comprises a reinforcing fiber comprising a carbon fiber;

wherein the composite base material contains 20 to 70% by volume of the reinforcing fiber.

Advantageous Effects of Invention

According to the present invention, a fiber-reinforced polyarylene sulfide copolymer composite base material can be provided that exhibits high rigidity at high temperature, as well as excellent chemical resistance and moldability during molding of molded articles from the composite base material.

Description of Embodiments

Embodiments of the present invention will be described in detail below.
The fiber-reinforced polyarylene sulfide copolymer composite base material in embodiments of the present invention has one of the following two aspects. The first aspect is a fiber-reinforced polyarylene sulfide copolymer composite base material comprising a continuous reinforcing fiber impregnated with a polyarylene sulfide copolymer described later, while the second aspect is a fiber-reinforced polyarylene sulfide copolymer composite base material comprising a reinforcing fiber base material with discontinuous reinforcing fibers dispersed, impregnated with a polyarylene sulfide copolymer described later.
In embodiments of the present invention, the continuous reinforcing fiber in the first aspect means that the reinforcing fiber is uninterrupted in the fiber-reinforced polyarylene sulfide copolymer composite base material. In embodiments of the present invention, the form and alignment of the reinforcing fibers may be, for example, those aligned in one direction, woven fabrics (clothes), knitted fabrics, braids, tows. Especially, reinforcing fibers are preferably aligned in one direction from the viewpoint of efficiently improving the mechanical properties in a specific direction.
The reinforcing fiber base material with a discontinuous fiber dispersed in the second aspect means that the reinforcing fiber is cut and dispersed to form a mat in the fiber-reinforced polyarylene sulfide copolymer composite base material. In embodiments of the present invention, the reinforcing fiber base material can be obtained by an arbitrary method, such as a wet method comprising dispersing a fiber in a solution and then processing the solution into a sheet form, or a dry method using a carding machine or an airlaid machine. A method using a carding machine or an airlaid machine is preferable from the viewpoint of productivity.
In embodiments of the present invention, the number-average fiber length of the discontinuous fibers in the reinforcing fiber base material is preferably from 3 to 100 mm. When the number-average fiber length of the discontinuous fibers is 3 mm or more, a sufficient reinforcing effect is provided by the discontinuous fibers, so that the mechanical strength of the obtained fiber-reinforced polyarylene sulfide copolymer composite base material can be further increased. Preferably, the number-average fiber length of the discontinuous fibers is the 5 mm or more. On the other hand, when the number-average fiber length of the discontinuous fibers is 100 mm or less, the flowability during molding can be further increased. The number-average fiber length of the discontinuous fibers is more preferably 50 mm or less, and still more preferably 30 mm or less.
In embodiments of the present invention, the number-average fiber length of the discontinuous fibers in the fiber-reinforced polyarylene sulfide copolymer composite base material can be determined by the following method. First, a fiber-reinforced polyarylene sulfide copolymer composite base material is cut into a 100 mm × 100 mm sample, which is then heated in an electric furnace at 600°C for 1.5 hours for ashing of the matrix resin. Then, 400 random discontinuous fibers are collected from such obtained burned fiber-reinforced polyarylene sulfide copolymer composite base material. The fiber lengths of the collected discontinuous fibers are measured in mm using a caliper, from which the number-average fiber length (Ln) can be calculated by the following formula:

$$Ln = \Sigma Li/400$$

(Li: measured fiber length (i = 1, 2, 3, ..., 400) (unit: mm)).
The number-average fiber length of the discontinuous fibers can be adjusted into the range described above by cutting fibers into a desired length in manufacturing the reinforcing fiber base material. The orientation of the discontinuous fibers in the reinforcing fiber base material is not particularly restricted, and preferably the discontinuous fibers are isotropically dispersed from the viewpoint of moldability.
According to the first and second aspects, the type of the reinforcing fiber is not particularly restricted, and examples include carbon fibers, metallic fibers, organic fibers, and inorganic fibers. Two or more of them may be used in combination.
Examples of the carbon fibers include PAN-based carbon fibers containing a polyacrylonitrile (PAN) fiber as a raw material; pitch-based carbon fibers containing petroleum tar or petroleum pitch as a raw material; cellulose-based carbon fibers containing viscose rayon or cellulose acetate as a raw material; vapor-grown carbon fibers containing hydrocarbon as a raw material; and graphitized fibers thereof. Of these carbon fibers, PAN-based carbon fibers are preferably used because of their excellent balance between strength and elastic modulus.
Examples of the metallic fibers include those made of metals such as iron, gold, silver, copper, aluminum, brass,

and stainless.

Examples of the organic fibers include those made of organic materials such as aramid, polybenzoxazole (PBO), polyphenylene sulfide, polyester, polyamide, and polyethylene. Examples of the aramid fibers include para-aramid fibers with excellent strength and elastic modulus, and meta-aramid fibers with excellent flame retardancy and long-term heat resistance. Examples of the para-aramid fibers include poly-paraphenylene terephthalamide fibers and copolyparaphenylene-3,4'-oxydiphenylene terephthalamide fibers. Examples of the meta-aramid fibers include poly-metaphenylene isophthalamide fibers. A para-aramid fiber is preferably used as an aramid fiber because of its high elastic modulus as compared with meta-aramid fibers.

Examples of the inorganic fibers include those made of inorganic materials such as glass, basalt, silicon carbide, and silicon nitride. Examples of the glass fibers include E-glass fibers (insulating), C-glass fibers (corrosion-resisting), S-glass fibers, and T-glass fibers (high strength and high elastic modulus). Basalt fibers are those obtained by making basalt minerals into fibers, and having very high heat resistance. Basalt commonly contains 9 to 25% by weight of an iron compound, FeO or $FeO_2$, and 1 to 6% by weight of a titanium compound, TiO or $TiO_2$, but molten basalt can also be made into a fiber with these components increased.

According to the first and second aspect of the present invention, the fiber-reinforced polyarylene sulfide copolymer composite base material is desired, due to its role often expected as a reinforcing material, to exhibit high mechanical properties. To exhibit high mechanical properties, the reinforcing fiber preferably comprises a carbon fiber.

According to the first and second aspect of the present invention, the reinforcing fiber in the fiber-reinforced polyarylene sulfide copolymer composite base material usually comprises an arrangement of one or more bundles of reinforcing fibers comprising a bundled plurality of single fibers. Preferably, the total number of filaments (number of single fibers) in the reinforcing fibers in which one or more bundles of the reinforcing fibers are arranged is from 1,000 to 2,000,000. The total number of filaments in the reinforcing fiber is more preferably from 1,000 to 1,000,000, still more preferably from 1,000 to 600,000, and particularly preferably from 1,000 to 300,000, from the viewpoint of productivity. The upper limit of the total number of filaments in the reinforcing fiber is not particularly limited as long as it takes into consideration the balance with dispersibility and ease of handling and can maintain good productivity, dispersibility, and ease of handling.

According to the first and second aspect of the present invention, one bundle of reinforcing fibers preferably comprises a bundle of 1,000 to 50,000 single fibers having an average diameter of from 5 to 10 $\mu$m.

The fiber-reinforced polyarylene sulfide copolymer composite base material in embodiments of the present invention comprises a polyarylene sulfide copolymer with a glass transition temperature from 95°C to 190°C impregnated therein. Compared to fiber-reinforced resin compositions manufactured by melting and mixing a reinforcing fiber and a thermoplastic resin, fiber-reinforced resin base materials manufactured by impregnating a fibrous base material with a thermoplastic resin have less fiber breakage during processing and higher mechanical properties, and thus are being attempted to be used as a substitute for conventional metals in structural members in various industries such as automobiles, electrical and electronics, housing, and aircrafts. Polyphenylene sulfide, a representative polyarylene sulfide, is used in various industries taking advantage of its excellent characteristics such as heat resistance, chemical resistance, high dimensional accuracy, and flame retardancy. However, polyphenylene sulfide has a glass transition temperature of about 90°C that is lower than the boiling point of water. Due to this, use of fiber-reinforced resin composite base materials using polyphenylene sulfide in structural members that are high reliability-requiring applications have been considered as difficult. However, in recent years, as studies to make structural members made of resin have progressed, polyphenylene sulfide is expected to have improved heat resistance while retaining its excellent properties. In the present invention, a polyarylene sulfide copolymer having chemical resistance like polyphenylene sulfide, but having a glass transition temperature form 95°C to 190°C, and further having excellent rigidity at high temperature can be used to provide a highly reliable fiber-reinforced resin composite base material.

The polyarylene sulfide copolymer used in the present invention preferably is a copolymer containing 70 mol% or more of a repeating unit represented by the formula -(Ar-S)-, and more preferably a copolymer containing 80 mol% or more. Examples of Ar include units represented by the following formulae (I) to (v), among which the unit represented by the formula (I) is particularly preferred.

[Chem 2]

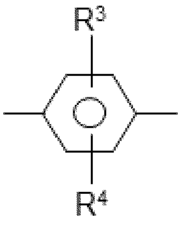
... (l)

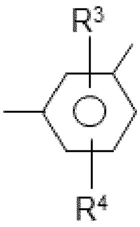
... (m)

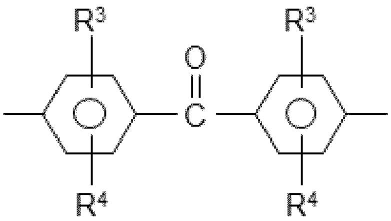
... (n)

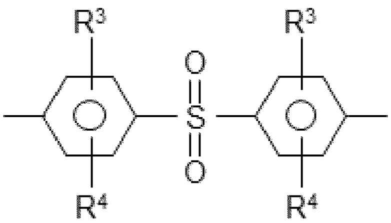
... (o)

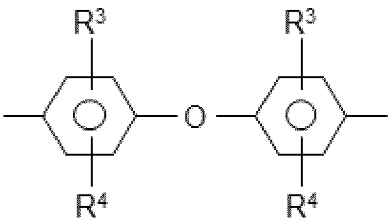
... (p)

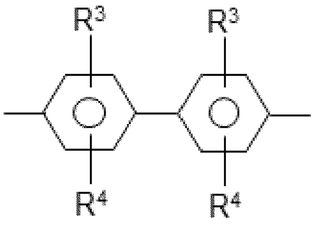
... (q)

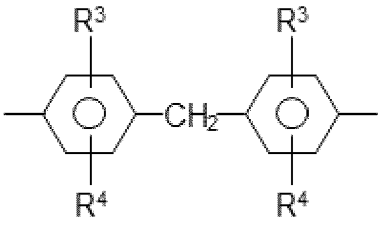
... (r)

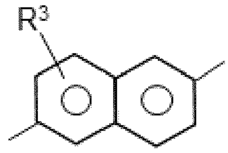
... (s)

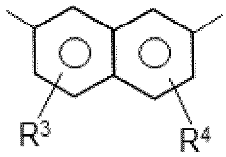
... (t)

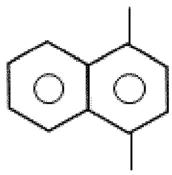
... (u)

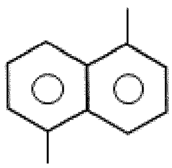
... (v)

$R^3$ and $R^4$, which are the same or different, each represent a substituent selected from hydrogen, $C_{1-12}$ alkyl, $C_{1-12}$ alkoxy, $C_{6-24}$ aryl, and halogen.

Examples of the structure contained in the polyarylene sulfide copolymer as a copolymer component include structures containing an aromatic ring, preferably the structures represented by the following formulae (a) to (j), and more preferably the structures represented by the following formulae (a), (c) to (f), and (h) to (j).

[Chem 3]

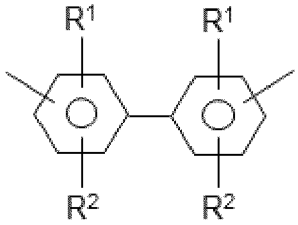
...(a)

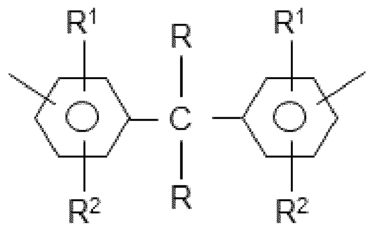
...(b)

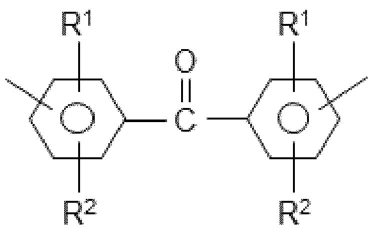
...(c)

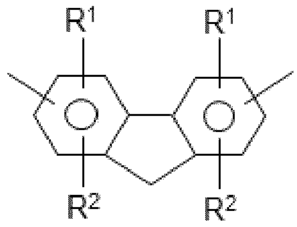
...(d)

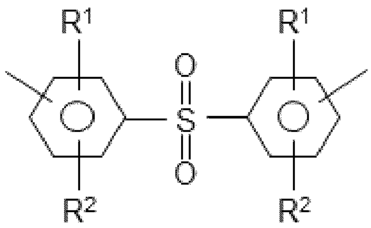
...(e)

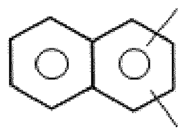
...(f)

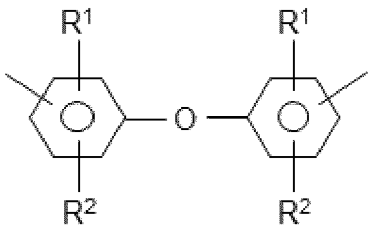
...(g)

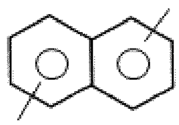
...(h)

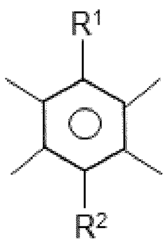
...(i)

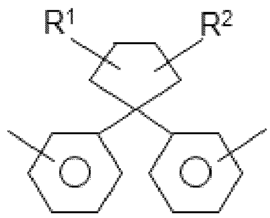
...(j)

R, $R^1$ and $R^2$, which are the same or different, each represent a substituent selected from hydrogen, $C_{1-12}$ alkyl, $C_{6-24}$ aryl, and halogen.

The arylene sulfide unit comprising the repeating unit -(Ar-S)- and the copolymer component in the polyarylene sulfide copolymer may be linked via a structure other than the repeating unit, or directly via terminal groups derived from the repeating units. Examples of the linking group include any one selected from amide and imide. More preferably, the arylene sulfide unit comprising the repeating unit -(Ar-S)- and the copolymer component are linked via an imide group because of high rigidity exhibited at high temperature. The amount of the linking group with respect to the sulfur atom in the polyarylene sulfide copolymer is preferably 1 mol% or more, more preferably 2 mol% or more, and still more preferably 4 mol% or more. The amount is preferably 30 mol% or less, and more preferably 40 mol% or less. The amount of the linking groups is twice the amount of the copolymer component described below, and can be determined by calculation.

The amount of the copolymer component contained as a structural unit in the polyarylene sulfide copolymer with respect to the sulfur atom in the polyarylene sulfide copolymer is preferably 0.5 mol% or more, more preferably 1 mol% or more, and still more preferably 2 mol% or more. The amount is preferably within the range as described above because it is likely to result in prevention of the decrease in the rigidity under high temperature conditions. In addition, the amount is

preferably 30 mol% or less, more preferably 20 mol% or less, and still more preferably 15 mol% or less. The amount is preferably within the range as described above, because it is likely to provide high chemical resistance.

The type and the amount of the copolymer component contained as a structural unit in the polyarylene sulfide copolymer can be determined, for example, from the absorption derived from a functional group of the copolymer component in the FT-IR spectrum.

The polyarylene sulfide copolymer used in the fiber-reinforced polyarylene sulfide copolymer composite base material in the present invention has a glass transition temperature of from 95°C to 190°C, preferably from 100°C to 180°C, and more preferably from 110°C to 160°C. When the glass transition temperature is lower than 95°C, the decrease in the rigidity under high temperature conditions is not sufficiently prevented, while when the glass transition temperature is higher than 190°C, the chemical resistance of the molded article tends to decrease, which the both cases are problematic. The term "glass transition temperature" as used herein is defined as a flexion point in the baseline shift detected using a differential scanning calorimeter when the temperature is elevated from 0°C to 340°C at a rate of 20°C/min. The glass transition temperature can be increased by introducing a rigid structure into the backbone structure of the polyarylene sulfide copolymer, the rigid structure including the structures represented by the formulae (a) to (j) described above.

Preferably, the polyarylene sulfide copolymer used in the fiber-reinforced polyarylene sulfide copolymer composite base material in the present invention has a melting point of 300°C or lower or no melting point. Having a melting point of 300°C or lower or no melting point enables easy melt-molding processing. The lower limit of the melting point is not particularly limited, and the melting point is preferably 200°C or higher from the viewpoint of heat resistance. Preferably, for example, the melting point is 220°C or higher. The term "melting point" as used herein refers to a melting peak temperature value detected using a differential scanning calorimeter when the temperature is elevated from 0°C to 340°C at a rate of 20°C/min, held at 340°C for 1 minute, cooled down to 100°C at a rate of 20°C/min, held at 100°C for 1 minute, and again elevated to 340°C at a rate of 20°C/min. The term "no melting point" as used herein is defined as absence of a clear melting peak when measured using a differential scanning calorimeter under the conditions described above. The melting point can be adjusted through the selection of the molecular weight of the arylene sulfide units in the polyarylene sulfide copolymer.

The glass transition temperature and the melting point of the polyarylene sulfide copolymer, even after impregnated into a reinforcing fiber base material to form the fiber-reinforced polyarylene sulfide copolymer composite base material, are substantially the same as those of the polyarylene sulfide copolymer before the impregnation. Thus, the glass transition temperature and the melting point of the polyarylene sulfide copolymer used in the fiber-reinforced polyarylene sulfide copolymer composite base material can be determined by measuring those of the fiber-reinforced polyarylene sulfide copolymer composite base material using a differential scanning calorimeter.

The molecular weight of the polyarylene sulfide copolymer used in the fiber-reinforced polyarylene sulfide copolymer composite base material in the present invention is preferably 10,000 or more, more preferably 20,000 or more, still more preferably 30,000 or more, still more preferably 40,000 or more, still more preferably 45,000 or more, in terms of weight average molecular weight. The weight average molecular weight is preferably 10,000 or more, because it is likely to result in sufficiently increased toughness and mechanical strength of the polyarylene sulfide copolymer. The upper limit of the weight average molecular weight is not particularly limited, and is, for example, preferably less than 1,000,000, more preferably less than 500,000, and still more preferably less than 200,000, because of excellent moldability in this range. The molecular weight of the polyarylene sulfide copolymer impregnated into the fiber-reinforced polyarylene sulfide copolymer composite base material is substantially the same as the molecular weight of the polyarylene sulfide copolymer before being the base material.

The lower limit of the number average molecular weight of the arylene sulfide units in the polyarylene sulfide copolymer used in the fiber-reinforced polyarylene sulfide copolymer composite base material in embodiments of the present invention is 1,000 or more, preferably 1,500 or more, and more preferably 2,000 or more. When the number average molecular weight of the arylene sulfide units in the copolymer is 1,000 or more, the polyarylene sulfide copolymer obtains sufficient chemical resistance. The upper limit of the number average molecular weight of the arylene sulfide units in the polyarylene sulfide copolymer is 10,000 or less, preferably 6,000 or less, and more preferably 4,000 or less. When the number average molecular weight of the arylene sulfide units is 10,000 or less, the reactivity with the copolymer component is improved. The number average molecular weight of the arylene sulfide units in the polyarylene sulfide copolymer can be determined by treating the polyarylene sulfide copolymer with 10% aqueous sodium hydroxide solution under reflux conditions for 5 hours and measuring the molecular weight of the residue.

To make the number average molecular weight of the arylene sulfide units in the polyarylene sulfide copolymer fall within the above range, an (A) arylene sulfide prepolymer having a number average molecular weight (Mn) of from 1,000 to 10,000 described later is preferably used in manufacturing the polyarylene sulfide copolymer.

The above-described weight average molecular weight and number average molecular weight can be determined, for example, by SEC (size exclusion chromatography) comprising a differential refractive index detector.

The amount of the arylene sulfide units having a number average molecular weight (Mn) of from 1,000 to 10,000 in the polyarylene sulfide copolymer used in the fiber-reinforced polyarylene sulfide copolymer composite base material in

the present invention is 50% by weight or more, preferably 60% by weight or more, and more preferably 70% by weight or more. When the amount of the arylene sulfide units having a number average molecular weight (Mn) of from 1,000 to 10,000 in the polyarylene sulfide copolymer is within the range, the polyarylene sulfide copolymer obtains sufficient chemical resistance. The upper limit of the amount of the arylene sulfide units having a number average molecular weight (Mn) of from 1,000 to 10,000 in the polyarylene sulfide copolymer used in the fiber-reinforced polyarylene sulfide copolymer composite base material is not particularly limited, and preferably the amount is 98% by weight or less because the copolymer component can be sufficiently contained. The amount of the arylene sulfide units having a number average molecular weight (Mn) of from 1,000 to 10,000 in the polyarylene sulfide copolymer can be determined by treating the arylene sulfide copolymer with 10% aqueous sodium hydroxide solution under reflux conditions for 5 hours, washing the residue with an organic solvent, measuring the weight, and dividing the weight by the weight before the treatment. Any common organic solvent can be used for the washing, including acetone, toluene, ethyl acetate, and hexane.

The decrease in the rigidity of the fiber-reinforced polyarylene sulfide copolymer composite base material in the present invention under high temperature conditions can be prevented. The degree of decrease in the rigidity under high temperature conditions can be evaluated, for example, by $T_{90}$, which is calculated by determining the temperature dependence of the storage modulus of the fiber-reinforced polyarylene sulfide copolymer composite base material using a viscoelasticity measuring device. A higher value of $T_{90}$ can be said to prevent the decrease in the rigidity at high temperature. The term "$T_{90}$" as used herein means a temperature at which the storage modulus is 90% of that at 50°C when the storage modulus of the fiber-reinforced polyarylene sulfide copolymer composite base material is measured using a viscoelasticity measuring device while elevating the temperature from 50°C to 250°C at a temperature elevation rate of 2°C/min. The $T_{90}$ value can be increased by introducing a rigid structure into the backbone structure of the polyarylene sulfide copolymer, the rigid structure including the structures represented by the formulae (a) to (j) described above. The $T_{90}$ value is preferably 90°C or higher, more preferably 100°C or higher, further preferably 110°C or higher. The $T_{90}$ is preferably 90°C or higher from the viewpoint that the decrease in the rigidity when used under high temperature conditions can be prevented. The upper limit of $T_{90}$ is not particularly limited and, for example, $T_{90}$ of 190°C or lower is preferable.

Method of Producing Polyarylene Sulfide Copolymer

The polyarylene sulfide copolymer can be produced by mixing an (A) arylene sulfide prepolymer and a (B) compound constituting the structural unit of the copolymer, and heating the mixture.

The method of producing the polyarylene sulfide copolymer will be described below.

(A) Arylene Sulfide Prepolymer

In the present embodiment, the lower limit of the molecular weight (number average molecular weight) of the (A) arylene sulfide prepolymer is selected to be 1,000 or more, and preferably 1,500 or more. The molecular weight of the arylene sulfide prepolymer preferably exceeds the above range because the polyarylene sulfide copolymer obtains sufficient chemical resistance. The upper limit of the molecular weight (number average molecular weight) of the arylene sulfide prepolymer is selected to be 10,000 or less, preferably 6,000 or less, and more preferably 4,000 or less. The number average molecular weight of the arylene sulfide prepolymer is preferably 10,000 or less, because it allows for sufficient introduction into the backbone structure of the copolymer component and sufficient prevention of the decrease in the rigidity at high temperature.

The (A) arylene sulfide prepolymer has a reactive functional group, selected from amino. The introduction of the functional group into the arylene sulfide prepolymer can be evaluated by the absorption derived from the functional group in FT-IR. The functional group may bind to the arylene sulfide prepolymer at any position that allows the functional group to react with a copolymer component described later, and is preferably contained at the end of the arylene sulfide prepolymer as a terminal group from the viewpoint of improving the chemical resistance of the polyarylene sulfide copolymer.

Examples of the method of producing such a preferred (A) arylene sulfide prepolymer include: (A1) a method comprising heating a mixture containing at least a sulfurizing agent, a dihalogenated aromatic compound, an organic polar solvent, and a monohalogenated compound having a reactive functional group; (A2) a method comprising adding a sulfide compound having a reactive functional group to polyphenylene sulfide and heating the mixture; (A3) a method comprising heating a (a) cyclic polyphenylene sulfide in the presence of a sulfide compound having a reactive functional group; and (A4) a method comprising heating a mixture containing at least polyphenylene sulfide, an organic polar solvent, and a sulfurizing agent, reacting them, adding a monohalogenated compound having a reactive functional group to the obtained reaction mixture, and heating the mixture. The method of claim 1 to easily obtain an (A) arylene sulfide prepolymer is the method (A2).

The method of producing an (A) arylene sulfide prepolymer according to claim 1 and not according to claim 1 will be described in detail below. First, raw materials for use in production of the (A) arylene sulfide prepolymer will be

described.

[Sulfurizing Agent]

The sulfurizing agent for use in synthesis of the (A) arylene sulfide prepolymer can preferably introduce a sulfide bond into a dihalogenated aromatic compound, including alkali metal sulfide, alkali metal hydrosulfide, and hydrogen sulfide.

Specific examples of the alkali metal sulfide include lithium sulfide, sodium sulfide, potassium sulfide, rubidium sulfide, cesium sulfide, and mixtures of two or more thereof, among which preferably used are lithium sulfide and/or sodium sulfide, and more preferably sodium sulfide. These alkali metal sulfides can be used as hydrates or aqueous mixtures, or as anhydrides. The term "aqueous mixture" refers to an aqueous solution, or a mixture of an aqueous solution and a solid component, or a mixture of water and a solid component. Commonly available inexpensive alkali metal sulfides are hydrates or aqueous mixtures, and thus alkali metal sulfides in such forms are preferably used.

Specific examples of the alkali metal hydrosulfide include lithium hydrosulfide, sodium hydrosulfide, potassium hydrosulfide, rubidium hydrosulfide, cesium hydrosulfide, and mixtures of two or more thereof, among which preferably used are lithium hydrosulfide and/or sodium hydrosulfide, and more preferably sodium hydrosulfide.

Alkali metal sulfide prepared in a reaction system obtained from alkali metal hydrosulfide and alkali metal hydroxide can also be used. Alternatively, alkali metal sulfide prepared by contacting alkali metal hydrosulfide and alkali metal hydroxide in advance can be used. Such an alkali metal hydrosulfide and alkali metal hydroxide can be used as hydrate or an aqueous mixture, or in the form of anhydride, and hydrate or an aqueous mixture is preferable from the viewpoint of availability and cost.

Alkali metal sulfide prepared in a reaction system obtained from alkali metal hydroxide, such as lithium hydroxide or sodium hydroxide, and hydrogen sulfide can also be used. Alternatively, alkali metal sulfide prepared by contacting alkali metal hydroxide, such as lithium hydroxide or sodium hydroxide, and hydrogen sulfide in advance can be used. Hydrogen sulfide may be used in a gaseous state, liquid state, or aqueous solution state.

Alkaline metal hydroxide and/or alkaline earth metal hydroxide can be used in combination with a sulfurizing agent. Preferred specific examples of the alkali metal hydroxide include sodium hydroxide, potassium hydroxide, lithium hydroxide, rubidium hydroxide, cesium hydroxide, and mixtures of two or more thereof. Specific examples of the alkaline earth metal hydroxide include calcium hydroxide, strontium hydroxide, and barium hydroxide, among which preferably used is sodium hydroxide.

When alkali metal hydrosulfide is used as the sulfurizing agent, alkali metal hydroxide is particularly preferably used together, whose amount used per mole of alkali metal hydrosulfide is preferably 0.95 mol or more, more preferably 1.00 mol or more, and still more preferably 1.005 mol or more. The upper limit is preferably 1.50 mol or less, more preferably 1.25 mol or less, and still more preferably 1.20 mol or less. When hydrogen sulfide is used as the sulfurizing agent, alkali metal hydroxide is particularly preferably used together, whose amount used per mole of hydrogen sulfide is preferably 2.00 mol or more, more preferably 2.01 mol or more, and still more preferably 2.04 mol or more. The upper limit is preferably 3.00 mol or less, more preferably 2.50 mol or less, and still more preferably 2.40 mol or less.

[Dihalogenated Aromatic Compound]

Examples of the dihalogenated aromatic compound for use in synthesis of the (A) arylene sulfide prepolymer include dihalogenated benzene, such as p-dichlorobenzene, o-dichlorobenzene, m-dichlorobenzene, p-dibromobenzene, o-dibromobenzene, m-dibromobenzene, 1-bromo-4-chlorobenzene, and 1-bromo-3-chlorobenzene; and dihalogenated aromatic compounds having a substituent other than halogen, such as 1-methoxy-2,5-dichlorobenzene, 1-methyl-2,5-dichlorobenzene, 1,4-dimethyl-2,5-dichlorobenzene, 1,3-dimethyl-2,5-dichlorobenzene, 2,5-dichlorobenzoic acid, 3,5-dichlorobenzoic acid, 2,5-dichloroaniline, and 3,5-dichloroaniline. Especially, halogenated aromatic compounds mainly containing p-dihalogenated benzene, represented by p-dichlorobenzene, are preferable. Particularly preferable are those containing 80 to 100 mol% of p-dichlorobenzene, and more preferably those containing 90 to 100 mol% of p-dichlorobenzene. Two or more different dihalogenated aromatic compounds may be used in combination.

[Organic Polar Solvent]

Preferred examples of the organic polar solvent for use in synthesis of the (A) arylene sulfide prepolymer include organic amide solvents. Specific examples that are preferably used include N-alkylpyrrolidones, such as N-methyl-2-pyrrolidone, N-ethyl-2-pyrrolidone, and N-cyclohexyl-2-pyrrolidone; caprolactams, such as N-methyl-ε-caprolactam; aprotic organic solvents represented by, for example, 1,3-dimethyl-2-imidazolidinone, N, N-dimethylacetamide, N, N-dimethylformamide, and hexamethylphosphoramide; and mixtures thereof because of their high reaction stability. Especially, N-methyl-2-pyrrolidone and 1,3-dimethyl-2-imidazolidinone are preferably used, and N-methyl-2-pyrrolidone

is more preferably used.

[Monohalogenated Compound]

The monohalogenated compound for use in synthesis of the (A) arylene sulfide prepolymer may be any monohalogenated compound having a reactive functional group W represented by the following formula (I), preferably those having as the reactive functional group W a functional group selected from hydroxyl, carboxyl, silanol, sulfo, amino, acid anhydride, acetamide, sulfonamide, cyano, isocyanate, aldehyde, acetyl, epoxy, and alkoxy silane, particularly preferably those having an amino group or an acid anhydride group. When selected from these functional groups, the functional group is likely to be efficiently introduced into the (A) arylene sulfide prepolymer.

[Chem 4]

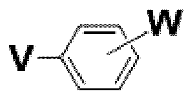

(I)

In the formula (I), V represents halogen, and W represents a reactive functional group.

Specific examples of such a monohalogenated compound include monohalogenated compounds such as 2-chlorobenzoic acid, 3-chlorobenzoic acid, 4-chlorobenzoic acid, 2-amino-4-chlorobenzoic acid, 4-chloro-3-nitrobenzoic acid, 4-chlorobenzophenone-2-carboxylic acid, 2-chloroaniline, 3-chloroaniline, 4-chloroaniline, 2-chlorophenol, 3-chlorophenol, 4-chlorophenol, 3-chlorophthalic acid, and 4-chlorophthalic acid. Especially preferred examples are 4-chlorobenzoic acid, 3-chlorophthalic acid, 4-chlorophthalic acid, 2-chloroaniline, 3-chloroaniline, and 4-chloroaniline from the viewpoint of, for example, reactivity during polymerization and versatility. These monohalogenated compounds may be used alone or in combination of two or more.

[Sulfide Compound]

The sulfide compound for use in synthesis of the (A) arylene sulfide prepolymer is a sulfide compound having a reactive functional group represented by the following general formula (III) (hereinafter, may also be abbreviated as "sulfide compound (III)").

[Chem 5]

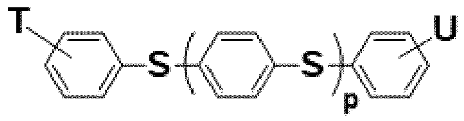

(III)

In the formula (III), at least one of T and U is a reactive functional group selected from amino, carboxyl, hydroxyl, acid anhydride, isocyanate, epoxy, silanol, alkoxy silane, and derivatives thereof, and preferably a reactive functional group selected from amino and acid anhydride. The number of repeating units p in the sulfide compound represents an integer from 0 to 20, and p may be a single integer, or a combination of different integers. Preferably, p is an integer from 0 to 15, and more preferably from 0 to 10. When the number of repeating units p is within the above preferred range, the solubility with polyphenylene sulfide and the low viscosity characteristics will not be impaired.

Examples of such a sulfide compound include 2,2'-thiodianiline, 3,3'-thiodianiline, 4,4'-thiodianiline, bis(2-carboxyphenyl) sulfide, bis(3-carboxyphenyl) sulfide, bis(4-carboxyphenyl) sulfide, bis(2-hydroxyphenyl) sulfide, bis(3-hydroxyphenyl) sulfide, bis(4-hydroxyphenyl) sulfide, bis(4-hydroxy-3-methylphenyl) sulfide, 5,5'-thiodisalicylic acid, 2,2',4,4'-tetrahydroxydiphenyl sulfide, and 3,3',4,4'-thiodiphthalic dianhydride, as well as oligomers thereof. Especially, 4,4'-thiodianiline, 3,3',4,4'-thiodiphthalic dianhydride, and oligomers thereof are more preferably used from the viewpoint of reactivity and crystallizability. These sulfide compounds may be used alone or in combination of two or more.

(A) Method of Producing Arylene Sulfide Prepolymer

Next, the production methods (A1) and (A2) described above will be described in detail.

[Method of Producing (A) Arylene Sulfide Prepolymer (A1)] (Reference)

A method of producing the (A) arylene sulfide prepolymer not according to claim 1 includes a method comprising

heating a mixture containing at least a sulfurizing agent, a dihalogenated aromatic compound, an organic polar solvent, and a monohalogenated compound having a reactive functional group.

The amount of the dihalogenated aromatic compound used in this production method is preferably 0.80 mol or more, more preferably 0.90 mol or more, still more preferably 0.95 mol or more, per mole of the sulfurizing agent, from the viewpoint of reducing degradation and efficiently producing polyphenylene sulfide with suitable viscosity for processing. The upper limit is preferably less than 1.50 mol, more preferably less than 1.10 mol, and still more preferably less than 1.05 mol. When the amount is 0.80 mol or more per mole of the sulfurizing agent, degradation is unlikely to occur, while when the amount is less than 1.50 mol, absence of manifestation of mechanical properties due to its decreased molecular weight can be prevented.

In this production method, the amount of an organic polar solvent used as a polymerization solvent for the (A) arylene sulfide prepolymer is not particularly restricted, and is preferably 2.5 mol or more, and as the upper limit preferably less than 5.5 mol, more preferably less than 5.0 mol, and still more preferably less than 4.5 mol, per mole of the sulfurizing agent, from the viewpoint of stable reactivity and economy.

In addition, this production method comprises adding a monohalogenated compound having a reactive functional group in combination with the dihalogenated aromatic compound. The amount of the monohalogenated compound used is preferably 0.01 mol% or more per mole of the dihalogenated aromatic compound. The upper limit is preferably 25 mol% or less, more preferably 18 mol% or less, and still more preferably 15 mol% or less. When the amount of the monohalogenated compound used is 0.01 mol% or more, reactive ends can be sufficiently introduced into the obtained (A) arylene sulfide prepolymer, while when the amount is 25 mol% or less, the molecular weight of the (A) arylene sulfide prepolymer will not decrease, and in addition, there is no disadvantage such as increase in the cost of raw materials.

The total amount of the halogenated compounds such as the dihalogenated aromatic compound and the monohalogenated compound is preferably within a specific range. The total amount of the halogenated compounds per mole of the sulfurizing agent is preferably 0.98 mol or more, more preferably 1.00 mol or more, and still more preferably 1.03 mol or more. On the other hand, the upper limit of the total amount of the halogenated compounds per mole of the sulfurizing agent is preferably less than 1.10 mol, more preferably less than 1.08 mol, and still more preferably less than 1.07 mol. When the total amount of the halogenated compounds is 0.98 mol or more per mole of the sulfurizing agent, degradation is unlikely to occur. When the total amount is less than 1.10 mol, absence of manifestation of mechanical properties due to decreased molecular weight will not occur.

When the (A) arylene sulfide prepolymer is produced according to the present production method, the monohalogenated compound may be added at any timing, e.g., during the dehydration step, at the start of polymerization, or in the middle of polymerization described later, and may be added separately in multiple steps. The timing of adding the monohalogenated compound is preferably at a time when the conversion ratio of the dihalogenated aromatic compound is less than 80%, and more preferably less than 70%. Most preferably, the monohalogenated compound is added between the completion of the dehydration step and the start of polymerization, or at the start of polymerization, i.e., at the same time as the dihalogenated aromatic compound. In the case where the monohalogenated compound is added at such preferred timing, there is no need for a reflux device and/or an injection device to prevent the monohalogenated compound from volatilizing away, and in addition, the monohalogenated compound does not remain in the polymerization system without completion of consumption at the end of the polymerization.

A sulfurizing agent can be used in a form of a hydrate or an aqueous mixture. In this case, a dehydration step is preferably carried out before adding a dihalogenated aromatic compound and/or a monohalogenated compound, the step comprising heating a mixture containing an organic polar solvent and the sulfurizing agent to remove excess amounts of water from the system. This dehydration step may be carried out by any method, for example, a method comprising adding an alkali metal hydrosulfide and an alkali metal hydroxide to an organic polar solvent desirably under an inert gas atmosphere at a temperature ranging from room temperature to 150°C, preferably from room temperature to 100°C, and heating the mixture to at least 150°C or higher, preferably to a temperature from 180 to 260°C, under normal or reduced pressure to evaporate off water. Preferably, the amount of water in the system after completion of the dehydration step is from 0.9 to 1.1 mol per mole of the sulfurizing agent added. Here, the term "the amount of water in the system" means an amount obtained by subtracting the amount of water removed from the system from the amount of water added during the dehydration step.

In the method of producing an (A) arylene sulfide prepolymer, a polymerization step is carried out comprising contacting the reaction product prepared in the dehydration step described above with a dihalogenated aromatic compound and/or a monohalogenated compound in an organic polar solvent to polymerize them. At the start of the polymerization step, a sulfurizing agent and a dihalogenated aromatic compound are added to an organic polar solvent desirably under an inert gas atmosphere, at a temperature ranging from 100°C or higher, preferably 130°C or higher, to 220°C or lower, preferably 200°C or lower as the upper limit. These materials may be added in any order or at the same time.

The polymerization reaction is performed under any polymerization conditions, as long as the temperature is within the range of 200°C or higher and lower than 280°C, and the effects of the present invention are achieved. For

example, a method comprising heating the mixture at a certain rate and then continuing the reaction at a temperature of 245°C or higher and lower than 280°C for a certain period of time; a method comprising performing the reaction at a certain temperature of 200°C or higher and lower than 245°C for a certain period of time, heating the reaction to a temperature of 245°C or higher and lower than 280°C, and continuing the reaction for a certain period of time; and a method comprising performing the reaction at a certain temperature of 200°C or higher and lower than 245°C, in particular 230°C or higher and lower than 245°C, for a certain period of time, heating the reaction to a temperature of 245°C or higher and lower than 280°C, and completing the reaction in a short period of time may be used.

The polymerization reaction described above is performed desirably under a non-oxidizing atmosphere, preferably under an inert gas atmosphere, such as nitrogen, helium, or argon, particularly preferably under a nitrogen atmosphere from the viewpoint of economy and ease of handling. In addition, the polymerization reaction may be performed under any pressure, since it depends on, for example, the types and amounts of the materials and solvents to be used, or the polymerization reaction temperature, and thus cannot be generally specified.

In the method of producing a polyarylene sulfide copolymer, an (A) arylene sulfide prepolymer is collected from the polymerization reaction products obtained by the method described above and used in a copolymerization reaction. The polymerization reaction products contain an (A) arylene sulfide prepolymer and an organic polar solvent, and may contain other components such as unreacted materials, water, and by-product salts. The (A) arylene sulfide prepolymer may be collected from such polymerization reaction products by any method, including a method comprising: removing, as necessary, a part or most of the organic polar solvent by distillation or other operation; then contacting the residual materials with a solvent that has low solubility with the (A) arylene sulfide prepolymer component, is miscible with the organic polar solvent, and is soluble with by-product salts, as necessary, under heating; and collecting the (A) arylene sulfide prepolymer as a solid. In general, solvents having such characteristics are relatively polar solvents. Preferred solvents may vary depending on the types of the organic polar solvent used and the by-product salts, and thus cannot not be limited. Examples of the solvent include water, alcohols represented by methanol, ethanol, propanol, isopropanol, butanol, and hexanol, ketones represented by acetone and methyl ethyl ketone, acetate esters represented by ethyl acetate and butyl acetate. From the viewpoint of availability and economy, water, methanol, and acetone are preferable, and water is particularly preferable.

Treatment with such solvents can reduce the amounts of organic polar solvents and by-product salts contained in the (A) arylene sulfide prepolymer. This treatment makes the (A) arylene sulfide prepolymer precipitated as a solid component, which can be recovered by a known solid-liquid separation method. Examples of the solid-liquid separation method include filtration, centrifugation, and decantation. This series of treatments can be repeated several times as necessary, which tends to further reduce the amounts of organic polar solvents and by-product salts contained in the (A) arylene sulfide prepolymer.

Methods for treatment with the solvent described above may comprise mixing the solvent and the polymerization reaction products, and can also comprise stirring or heating as necessary and appropriate. Treatment with the solvent can be performed at any temperature, preferably at a temperature from 20 to 220°C, and more preferably from 50 to 200°C. Such a range is preferable because, for example, it facilitates the removal of by-product salts and enables treatment under relatively low pressure. When water is used as the solvent, the water is preferably distillated water or deionized water. An aqueous solution can also be used, as necessary, containing organic acidic compounds such as formic acid, acetic acid, propionic acid, butyric acid, chloroacetic acid, dichloroacetic acid, acrylic acid, crotonic acid, benzoic acid, salicylic acid, oxalic acid, malonic acid, succinic acid, phthalic acid, and fumaric acid, as well as alkali metal and alkaline earth metal salts thereof; inorganic acidic compounds such as sulfuric acid, phosphoric acid, hydrochloric acid, carbonic acid, and silicic acid; and ammonium ion. When the obtained (A) arylene sulfide prepolymer after the treatment contains the solvent used in the treatment, drying can be performed, as necessary, to remove the solvent.

[Method of Producing (A) Arylene Sulfide Prepolymer (A2)]

The method of producing an (A) arylene sulfide prepolymer of claim 1 includes a method comprising adding a sulfide compound (III) to polyphenylene sulfide and heating the mixture. According to this method, an (A) arylene sulfide prepolymer having the properties described above can be easily obtained.

Preferred examples of polyphenylene sulfide for use in the method of producing an (A) arylene sulfide prepolymer (A2) include polyphenylene sulfides containing a p-phenylene sulfide unit as a main constituent unit of the polymer in an amount of 80 mol% or more, in particular, 90 mol% or more.

In the method of producing an (A) arylene sulfide prepolymer (A2), the amount of the sulfide compound (III) is preferably 0.01 mol% or more per mole of sulfur atoms in the polyphenylene sulfide. In addition, the upper limit is preferably 25 mol% or less, more preferably 15 mol% or less, still more preferably 10 mol% or less, and particularly preferably 5 mol% or less. When the amount of the sulfide compound is 0.01 mol% or more, the (A) arylene sulfide prepolymer to be obtained will have sufficient reactive functional groups introduced. When the amount is 25 mol% or less, the (A) arylene sulfide prepolymer to be obtained do not have a too low molecular weight, providing no disadvantages such as increase in

material cost.

When producing an (A) arylene sulfide prepolymer by the production method (A2), the preferred heating temperature is that at which a reaction mixture containing polyphenylene sulfide and a sulfide compound (III) is melt. Any temperature can be employed as long as it is under such temperature conditions. The heating temperature is preferably higher than the melting temperature of polyphenylene sulfide because of no need for an excessively long time to obtain the (A) arylene sulfide prepolymer. The melting temperature of polyphenylene sulfide cannot be uniquely indicated because it varies with the composition and molecular weight of polyphenylene sulfide and the environment during heating. However, the melting temperature can be determined, for example, by analyzing polyphenylene sulfide using a differential scanning calorimeter. The lower limit of the heating temperature is, for example, 180°C or higher, preferably 200°C or higher, more preferably 220°C or higher, and still more preferably 240°C or higher. In this temperature range, polyphenylene sulfide is melt, so that an (A) arylene sulfide prepolymer can be obtained in a short time. The upper limit of the heating temperature is, for example, 400°C or lower, preferably 380°C or lower, and more preferably 360°C or lower. At this temperature, adverse effects on the properties of the (A) arylene sulfide prepolymer due to undesirable side reactions are likely to be reduced, so that an (A) arylene sulfide prepolymer having the properties described above can be obtained.

The reaction time cannot be uniquely specified because it varies depending on various properties of polyphenylene sulfide to be used, such as the molecular weight and the viscosity, the type of the sulfide compound (III) to be used, and the conditions such as the heating temperature. However, the reaction time is preferably set such that the above-mentioned undesirable side reactions do not occur. The heating time is, for example, 0.01 hours or longer, and preferably 0.05 hours or longer. The upper limit is, for example, 100 hours or shorter, preferably 20 hours or shorter, and more preferably 10 hours or shorter.

Polyphenylene sulfide can also be heated under conditions substantially not containing a solvent. When performed under such conditions, heating can be made in a short time, resulting in tendency that an (A) arylene sulfide prepolymer is easily obtained in a short time with high reaction rate. Here, the term "conditions substantially not containing a solvent" refers to 10% by weight or less of the solvent in polyphenylene sulfide, and preferably 3% by weight or less.

When producing an (A) arylene sulfide prepolymer by the production method (A2), various transition-metal compounds can be used as reaction accelerating catalysts, and metals of groups 8 to 11 and periods 4 to 6 of the periodic table are preferably used. Examples of such metal species include nickel, palladium, platinum, iron, ruthenium, rhodium, copper, silver, and gold. Suitable examples of the transition-metal compounds include various complexes, specifically palladium acetate, palladium chloride, palladium bromide, palladium iodide, palladium sulfide, bis(dibenzylideneacetone) palladium, tris(dibenzylideneacetone)dipalladium, tetrakis(triphenylphosphine)palladium, bis(tri-t-butylphosphine)palladium, bis[1,2-bis(diphenylphosphino)ethane]palladium, bis(tricyclohexylphosphine)palladium, [P,P'-1,3-bis(di-i-propylphosphino)propane] [P-1,3-bis(di-i-propylphosphino)propane]palladium, 1,3-bis(2,6-di-i-propylphenyl)imidazole-2-ylidene (1,4-naphthoquinone) palladium dimer, 1,3-bis(2,4,6-trimethylphenyl)imidazole-2-ylidene (1,4-naphthoquinone) palladium dimer, bis(3,5,3',5'-dimethoxydibenzylideneacetone)palladium, platinum chloride, platinum bromide, bis(tri-t-butylphosphine)platinum, tetrakis(triphenylphosphine)platinum, tetrakis(trifluorophosphine)platinum, ethylene bis(triphenylphosphine)platinum, platinum-2,4,6,8-tetramethyl-2,4,6,8-tetravinylcyclotetrasiloxane complex, nickel formate, nickel acetate, nickel chloride, nickel bromide, nickel iodide, nickel sulfide, tetrakis(triphenylphosphine)nickel, tetrakis(triphenylphosphite)nickel, bis(1,5-cyclooctadiene)nickel, bisacetylacetone nickel, iron acetate, iron chloride, iron bromide, iron iodide, triiron dodecacarbonyl, iron pentacarbonyl, rhodium acetate, rhodium chloride, rhodium bromide, tetrarhodium dodecacarbonyl, hexarhodium hexadecacarbonyl, ruthenium chloride, ruthenium bromide, triruthenium dodecacarbonyl, copper acetate, copper chloride, copper bromide, silver acetate, silver chloride, silver bromide, gold acetate, gold chloride, and gold bromide. These catalysts may be used alone, or in a form of a mixture or in combination of two or more thereof.

Pre-formed complexes may be added as the catalyst, or a transition-metal compound such as a transition metal salt and a ligand compound may be added separately. For example, a complex of triphenylphosphine, tri-t-butylphosphine, dibenzylideneacetone, dimethoxydibenzylideneacetone, cyclooctadiene, or carbonyl as the ligand may be used.

The concentration of the polymerization catalyst used is from 0.001 to 20 mol%, preferably from 0.005 to 15 mol%, and more preferably from 0.01 to 10 mol% based on sulfur atoms in the sulfide compound (III). When the concentration is 0.001 mol% or more, an effect of accelerating the reaction can be obtained, while when 20 mol% or less, polyarylene sulfide without degradation of the properties due to foreign matter can be obtained.

When the catalyst is added, the catalyst should be directly added, and is preferably uniformly dispersed. The method of uniformly dispersing a catalyst may be, for example, a method of mechanically dispersing a catalyst. Specific examples of the method of mechanically dispersing a catalyst include methods using a grinder, a stirrer, a mixer, a shaker, and a mortar. In the case where the catalyst is a solid when dispersed, the average particle size of the polymerization catalyst preferably is 1 mm or less in order to allow for more uniform dispersion.

The heating step described above can be performed not only in a manner using a usual heating reaction device, but also using any device equipped with a heating mechanism, such as using an extruder or a melt kneader, including known processes such as batch process and continuous process.

Preferably, the step of heating polyphenylene sulfide is performed under a non-oxidizing atmosphere, and also preferably under reduced pressure conditions. When the heating step is performed under reduced pressure conditions, it is preferable to change the atmosphere in the reaction system to a non-oxidizing atmosphere and then to reduced pressure conditions. This is likely to allow for prevention of the occurrence of undesirable side reactions, such as crosslinking reactions and decomposition reactions, for example, between polyphenylene sulfides. The term "non-oxidizing atmosphere" refers to an atmosphere with an oxygen concentration in the gas phase in contact with polyphenylene sulfide is 5% by volume or less, preferably 2% by volume or less, and more preferably substantially no oxygen, i.e., an inert gas atmosphere such as nitrogen, helium, or argon, and a nitrogen atmosphere is particularly preferable from the viewpoint of economy and ease of handling. The term "under reduced pressure conditions" means that the inside of the reaction system is under a pressure lower than atmospheric pressure, and the upper limit is preferably 50 kPa or less, more preferably 20 kPa or less, and still more preferably 10 kPa or less. The lower limit is, for example, 0.1 kPa or more, and preferably 0.2 kPa or more. Under reduced pressure conditions above the preferred lower limit, loads from the reduced pressure is not applied on the reaction device more than necessary, while below the preferred upper limit, undesirable side reactions such as crosslinking reaction are less likely to occur, so that an (A) arylene sulfide prepolymer having the properties described above can be obtained. The polyphenylene sulfide can also be heated under pressurized conditions. When the heating step is performed under pressurized conditions, it is preferable to change the atmosphere in the reaction system to a non-oxidizing atmosphere and then to the pressurized conditions. The term "under pressurized conditions" means that the inside of the reaction system is under a pressure higher than the atmospheric pressure, and the upper limit is not particularly restricted, and is preferably 0.2 MPa or less from the viewpoint of ease of handling of the reaction device. Polyphenylene sulfide to be used here is not particularly restricted.

In a preferred embodiment, after the heating step is performed under a non-oxidizing atmosphere, reduced pressure conditions are applied in order to remove an unreacted sulfide compound (III) that remains after the end of heating. Here, the reduced pressure conditions are the same as the preferred reduced pressure conditions during the heating step described above. The lower limit of the time period under the reduced pressure conditions is preferably 3 minutes or longer, and more preferably 5 minutes or longer. The upper limit is preferably shorter than 2 hours, and more preferably shorter than 1 hour. When the time period under the reduced pressure conditions is above the preferred lower limit, the residual sulfide compound (III) can be sufficiently removed, while when below the preferred upper limit, undesirable side reactions such as crosslinking reaction are unlikely to occur.

(B) Compound Constituting Structural Unit of Copolymer

The compound constituting the structural unit of the copolymer used in the present invention is a compound constituting one of the structural units in the polyarylene sulfide copolymer constituting the present invention. The compound constituting the structural unit of the copolymer is a compound having within a single molecule two or more reactive functional groups capable of being linked with the (A) arylene sulfide prepolymer by a reaction. In this case, the functional groups contained in the compound constituting the structural unit of the copolymer may be the same or different, and preferably are the same from the viewpoint of the uniformity of the reaction. In addition, the compound preferably contains an aromatic ring from the viewpoint of chemical and physical stability.

The compound constituting the structural unit of the copolymer is at least one or more compound selected from the following formulae (a') to (k') (hereinafter, may also be referred to as "(B) compound").

[Chem 6]

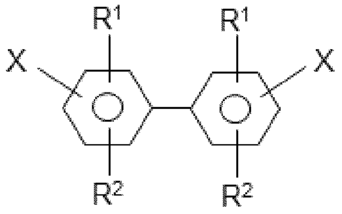 ...(a')

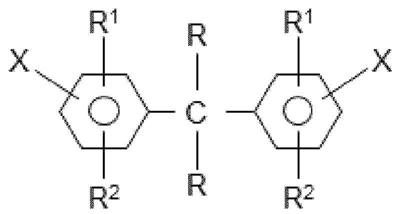 ...(b')

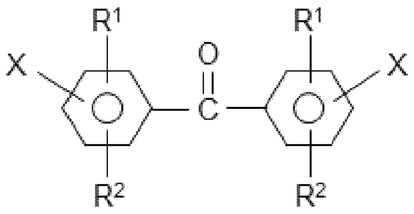 ...(c')

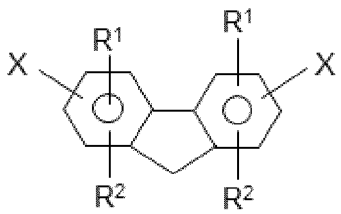 ...(d')

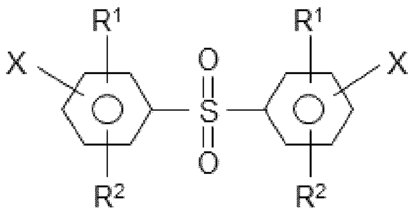 ...(e')

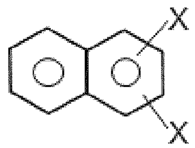 ...(f')

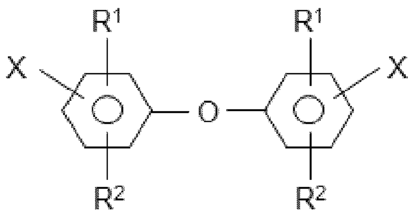 ...(g')

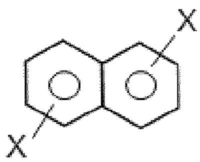 ...(h')

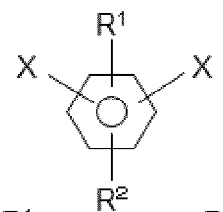 ...(i')

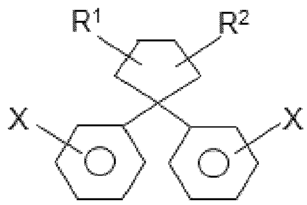 ...(j')

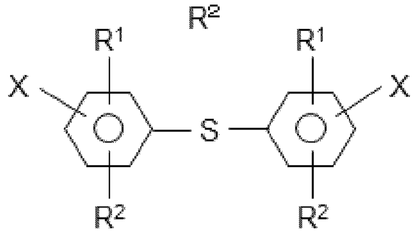 ...(k')

In the formulae, X is any one selected from hydroxyl, carboxyl, silanol, sulfo, amino, acid anhydride, acetamide, sulfonamide, cyano, isocyanate, aldehyde, acetyl, epoxy, and alkoxy silane; preferably amino or acid anhydride from the viewpoint of the reactivity with the (A) arylene sulfide prepolymer. The aromatic ring in the compounds represented by the formulae (a') to (k') may be a bi- or tri-substituted group, and the two or more substituents X in a single substituted aromatic ring may be the same or different. R, $R^1$ and $R^2$, which are the same or different, each represent a substituent selected from hydrogen, $C_{1-12}$ alkyl, $C_{6-24}$ aryl, and halogen, and is preferably hydrogen, methyl, ethyl, or propyl from the viewpoint of ease of availability.

Specific examples of the (B) compound include p-phenylenediamine, 4,4'-diaminodiphenylsulfide, 4,4'-diaminodiphenylsulphone, 4,4'-diaminobenzophenone, 4,4'-diaminodiphenylmethane, 4,4'-diaminodiphenylether, 2,7-diaminofluorene, o-toluidine, 1,5-diaminonaphthalene, 1,4-diaminonaphthalene, p-benzene diol, 4,4'-dihydroxydiphenylsulfide, 4,4'-dihydroxydiphenylsulphone, 4,4'-dihydroxybenzophenone, 4,4'-dihydroxydiphenylmethane, 4,4'-dihydroxydiphenylether, 2,7-dihydroxyfluorene, 4,4'-dihydroxybiphenyl, 1,5-dihydroxynaphthalene, pyromellitic acid, 3,3',4,4'-thiodiphthalic acid, 3,3',4,4'-sulfonyldiphthalic acid, 3,3',4,4'-benzophenonetetracarboxylic acid, 3,3',4,4'-sulfinyldiphthalic acid, 3,3',4,4'-biphenyltetracarboxylic dianhydride, 3,3'4,4'-tetracarboxyldiphenylmethane dianhydride, 9, 9-bis(3, 4-dicarboxyphenyl)fluorene dianhydride, pyromellitic dianhydride, 3,3',4,4'-thiodiphthalic dianhydride, 3,3',4,4'-sulfonyldiphthalic dianhydride, 3,3',4,4'-benzophenonetetracarboxylic dianhydride, 3,3',4,4'-sulfinyldiphthalic dianhydride, 4,4'-thiodibenzoic acid, 4,4'-dicarboxylbenzophenone, 4,4'-sulfinyldibenzoic acid, and 4,4'-dicarboxylbiphenyl; among which, 4,4'-diaminodiphenylsulphone, 4,4'-diaminobenzophenone, 2,7-diaminofluorene, o-toluidine, 3,3',4,4'-thiodiphthalic dianhydride, 3,3',4,4'-benzophenonetetracarboxylic dianhydride, 3,3',4,4'-sulfinyldiphthalic dianhydride, 3,3',4,4'-biphenyltetracarboxylic dianhydride, 9,9-bis(3, 4-dicarboxyphenyl) fluorene dianhydride, 4,4'-thiodibenzoic acid, 4,4'-dicarboxylbenzophenone, 4,4'-sulfinyldibenzoic acid, 4,4'-dicarboxylbiphenyl are preferably used from the viewpoint of reactivity.

The lower limit of the amount of the (B) compound added is preferably 0.5 mol% or more, more preferably 1 mol% or more, and still more preferably 2 mol% or more, with respect to sulfur atoms in the (A) arylene sulfide prepolymer. The upper limit is preferably 30 mol% or less, more preferably 20 mol% or less, and still more preferably 15 mol% or less, with respect to sulfur atoms in the (A) arylene sulfide prepolymer. When the amount added is not less than the lower limit described above, the decrease in the rigidity of the obtained polyarylene sulfide copolymer at high temperature can be sufficiently prevented. As the amount of the (B) compound added increases, the obtained polyarylene sulfide copolymer is likely to have reduced chemical resistance. When the amount of the (B) compound added is within the range described above, a polyarylene sulfide copolymer exhibiting sufficient mechanical properties and chemical resistance can be readily produced.

The polyarylene sulfide copolymer can be produced by mixing an (A) arylene sulfide prepolymer and a (B) compound, and heating the mixture. Here, the heating temperature to be selected is 200°C or higher, preferably 230°C or higher, and more preferably 250°C or higher. The upper limit of the heating temperature is, for example, 400°C or lower, preferably 380°C or lower, and more preferably 360°C or lower. The heating temperature is preferably 200°C or higher because the reaction between the (A) arylene sulfide prepolymer and the (B) compound can be easily accelerated. The heating temperature is preferably above the temperature at which the (A) arylene sulfide prepolymer melts because the reaction can be finished in shorter time. The melting temperature of the (A) arylene sulfide prepolymer cannot be uniquely indicated because it varies depending on the composition and molecular weight of the (A) arylene sulfide prepolymer and the environment during heating. However, the melting temperature can be determined, for example, by analyzing the (A) arylene sulfide prepolymer using a differential scanning calorimeter. However, when the melting temperature is too high, there is a tendency that undesirable side reactions, represented by crosslinking reactions and decomposition reactions between arylene sulfide prepolymers, are likely to occur, so that the obtained polyarylene sulfide copolymer may have degraded properties. Thus, it is desirable to avoid use of temperatures at which such undesirable side reactions noticeably occur. The heating time cannot be uniquely indicated because it varies depending on the composition and molecular weight of the (A) arylene sulfide prepolymer and the environment during heating. Preferably, the time is set so that the undesirable side reactions described above occur minimally. The heating time is, for example, from 0.01 to 100 hours, preferably from 0.1 to 20 hours, and more preferably from 0.1 to 10 hours. When the heating time is shorter than 0.01 hours, the reaction between the (A) arylene sulfide prepolymer and the (B) compound is likely to be insufficient. When the heating time is over 100 hours, not only adverse effects on the properties of the obtained polyarylene sulfide copolymer due to undesirable side reactions can more often appear as a tendency, but also economic disadvantages may arise.

In the present invention, a functional group contained in an (A) arylene sulfide prepolymer and X contained in a (B) compound are preferably reacted to form an imide group. The combination to form an imide group is not particularly restricted as long as an imide group is formed. Preferably, the combination of a functional group contained in an (A) arylene sulfide prepolymer and X contained in a (B) compound is a combination of an acid anhydride group and an amino group, or of a carboxyl group and an amino group. In particular, a combination of an acid anhydride group and an amino group is preferred. For example, when the (A) component has an acid anhydride group, X contained in the (B) component is preferably an amino group, while when the (A) component has an amino group, X contained in the (B) component is preferably an acid anhydride group.

Preferably, the heating step in the method of producing a polyarylene sulfide copolymer is performed in the absence of a solvent from the viewpoint of preventing contamination of the molded article due to gas generated during molding processes. Without being limited to the above-described method, the heating step can also be performed in the presence of a solvent. Any solvent may be used that does not substantially cause undesirable side reactions such as decomposition of and crosslinking in the produced polyarylene sulfide copolymer. Examples of such a solvent include nitrogen-containing polar solvents, such as N-methyl-2-pyrrolidone, dimethylformamide, and dimethylacetamide; sulfoxide and sulfone solvents, such as dimethyl sulfoxide and dimethyl sulfone; ketone solvents, such as acetone, methyl ethyl ketone, diethyl ketone, and acetophenone; ether solvents, such as dimethyl ether, dipropyl ether, and tetrahydrofuran; halogen solvents, such as chloroform, methylene chloride, trichloroethylene, ethylene dichloride, dichloroethane, tetrachloroethane, and chlorobenzene; alcohol and phenol solvents, such as methanol, ethanol, propanol, butanol, pentanol, ethylene glycol, propylene glycol, phenol, cresol, and polyethylene glycol; and aromatic hydrocarbon solvents, such as benzene, toluene, and xylene. An inorganic compound such as carbon dioxide, nitrogen, or water in a state of supercritical fluid can also be used as the solvent. These solvents can be used alone or as a mixture of two or more thereof.

The heating step in the production method described above may be performed not only in a manner using a usual

polymerization reaction apparatus, but also in the mold for producing the molded article. Alternatively, the heating step can be performed, without limitation, by using an apparatus equipped with a heating mechanism, for example, using an extruder or a melt kneader. A known process such as batch process or continuous process can be employed. In one preferred embodiment, an (A) arylene sulfide prepolymer and a (B) compound are impregnated into a continuous reinforcing fiber or a reinforcing fiber base material with a discontinuous fiber dispersed, and then heated.

Preferably, the heating step in the production method described above is performed under a non-oxidizing atmosphere, and also preferably under reduced pressure conditions. When the heating step is performed under reduced pressure conditions, it is preferable to change the atmosphere in the reaction system to a non-oxidizing atmosphere and then to the reduced pressure conditions. This is likely to allow for prevention of the occurrence of undesirable side reactions, such as crosslinking reactions and decomposition reactions, for example, between polyphenylene sulfide prepolymers. The term "non-oxidizing atmosphere" refers to an atmosphere with an oxygen concentration in the gas phase is 5% by volume or less, preferably 2% by volume or less, and more preferably substantially no oxygen, i.e., an inert gas atmosphere such as nitrogen, helium, or argon, and especially a nitrogen atmosphere is particularly preferable from the viewpoint of economy and ease of handling. The term "under reduced pressure conditions" means that the inside of the reaction system is under a pressure lower than the atmospheric pressure, and the upper limit is preferably 50 kPa or less, more preferably 20 kPa or less, and still more preferably 10 kPa or less. The lower limit is, for example, 0.1 kPa or more. The reduced pressure conditions are preferably below the preferred upper limit because undesirable side reactions such as crosslinking reactions are likely to be prevented, while the reduced pressure conditions are preferably not less than the preferred lower limit because loads from the reduced pressure is not applied on the reaction device more than necessary.

The arylene sulfide unit in the polyarylene sulfide copolymer is derived from the (A) arylene sulfide prepolymer, and the number average molecular weight of the arylene sulfide units in the polyarylene sulfide copolymer is equal to the number average molecular weight of the (A) arylene sulfide prepolymer.

The fiber-reinforced polyarylene sulfide copolymer composite base material in embodiments of the present invention comprises a continuous reinforcing fiber, or a reinforcing fiber base material with discontinuous reinforcing fibers dispersed, impregnated with the polyarylene sulfide copolymer described above, and may further contain, as necessary, other polymers, and/or various additives in the polyarylene sulfide copolymer.

Additives that can be added include plasticizing agents, such as olefin-based copolymers, alkoxy silane compounds, isocyanate-based compounds, organic titanate-based compounds, organic borane-based compounds, polyalkylene oxide oligomer-based compounds, thioether-based compounds, ester-based compounds, and organic phosphorus-based compounds; crystal nucleating agents, such as talc, kaolin, organophosphorus compounds, and polyether ether ketone; metallic soaps, such as montanic acid waxes, lithium stearate, and aluminum stearate; mold releasing agents, such as polycondensation products of ethylene diamine, stearic acid, and sebacic acid, and silicone -based compounds; and anti-coloring agents, such as hypophosphite; as well as additives such as lubricants, anti-UV agents, antioxidants, flame retardants, coloring agents, and foaming agents.

In embodiments of the present invention, the fiber-reinforced polyarylene sulfide copolymer composite base material can be obtained by impregnating a continuous reinforcing fiber with a polyarylene sulfide copolymer (first aspect). Alternatively, the fiber-reinforced polyarylene sulfide copolymer composite base material can be obtained by impregnating a reinforcing fiber base material with discontinuous reinforcing fibers dispersed therein, with a polyarylene sulfide copolymer (second aspect).

In the first aspect, any of the methods of impregnating a continuous reinforcing fiber with a polyarylene sulfide copolymer may be used, including film methods comprising melting a film-shaped polyarylene sulfide copolymer, and pressurizing it, thereby impregnating a bundle of reinforcing fibers with the polyarylene sulfide copolymer; commingling methods comprising mixing a fibrous polyarylene sulfide copolymer and a bundle of reinforcing fibers together, melting the fibrous polyarylene sulfide copolymer, pressurizing them, thereby impregnating the bundle of reinforcing fibers with the polyarylene sulfide copolymer; powder methods comprising dispersing a powdered polyarylene sulfide copolymer into gaps between fibers of a bundle of reinforcing fibers, melting the powered polyarylene sulfide copolymer, pressurizing them, thereby impregnating the bundle of reinforcing fibers with the polyarylene sulfide copolymer; and drawing methods comprising immersing a bundle of reinforcing fibers in a melted polyarylene sulfide copolymer, pressurizing them, thereby impregnating the bundle of reinforcing fibers with the polyarylene sulfide copolymer. In one preferred embodiment of the first aspect of the present invention, a continuous reinforcing fiber can also be impregnated with a polyarylene sulfide copolymer by impregnating a continuous reinforcing fiber with an (A) arylene sulfide prepolymer and a (B) compound, and then heating them.

According to the first aspect of the present invention, the thickness of the fiber-reinforced polyarylene sulfide copolymer composite base material is preferably from 0.1 to 10 mm. When the thickness is 0.1 mm or more, the strength of the molded article obtained using the fiber-reinforced polyarylene sulfide copolymer composite base material can be increased. More preferably, the thickness is 0.2 mm or more. On the other hand, when the thickness is 1.5 mm or less, a reinforcing fiber is more easily impregnated with a polyarylene sulfide copolymer. The thickness is more preferably 1 mm or less, still more preferably 0.7 mm or less, and still more preferably 0.6 mm or less.

According to the first aspect of the present invention, the volume fraction of the fiber-reinforced polyarylene sulfide copolymer composite base material is preferably from 20 to 70% by volume. In other words, the reinforcing fiber is preferably contained in an amount of from 20 to 70% by volume (20% by volume or more and 70% by volume or less) based on the entire fiber-reinforced polyarylene sulfide copolymer composite base material (100% by volume). When the reinforcing fiber is contained in an amount of 20% by volume or more, the strength of the molded article obtained using the fiber-reinforced polyarylene sulfide copolymer composite base material can be increased. The volume fraction is more preferably 30% by volume or more, and still more preferably 40% by volume or more. On the other hand, when the reinforcing fiber is contained in an amount of 70% by volume or less, the reinforcing fiber is more easily impregnated with the polyarylene sulfide copolymer. The volume fraction is more preferably 60% by volume or less, and still more preferably 55% by volume or less. The volume fraction can be adjusted into a desired range by adjusting the amounts of the reinforcing fiber and the polyarylene sulfide copolymer added.

The volume fraction ($V_f$) of the reinforcing fiber in the fiber-reinforced polyarylene sulfide copolymer composite base material can be determined by measuring the mass ($W_0$) of the fiber-reinforced polyarylene sulfide copolymer composite base material; immersing the composite base material in 1-chloronaphthalene at 250°C; eluting out the polyarylene sulfide copolymer; measuring the mass (W1) of the reinforcing fiber remaining as a residue; and perform a calculation according to the following formula:

$$V_f\ (\%\ \text{by volume}) = (W_1 / \rho_f) / \{W_1 / \rho_f + (W_0 - W_1) / \rho_r\} \times 100 \qquad \text{(IV)}$$

$\rho_f$: density (g/cm$^3$) of the reinforcing fiber
$\rho_r$: density (g/cm$^3$) of the polyarylene sulfide copolymer

In embodiments of the present invention, a fiber-reinforced polyarylene sulfide copolymer composite base material with desired impregnation properties can be selected depending on the application and purpose. For example, a prepreg with improved impregnation properties, a semipreg with half impregnation, or a fabric with low impregnation properties may be used. In general, molding materials with higher impregnation properties are preferable because they provide molded articles having excellent mechanical properties in shorter time.

According to the second aspect of the present invention, the method of impregnating a reinforcing fiber base material with discontinuous fibers dispersed therein with a polyarylene sulfide copolymer may be, for example, a method comprising feeding a polyarylene sulfide copolymer using an extruder and impregnating it into a reinforcing fiber base material; a method comprising dispersing, melting, and impregnating a powdered polyarylene sulfide copolymer into the fiber layer of a reinforcing fiber base material; a method comprising making a polyarylene sulfide copolymer into a film, and laminating it with a reinforcing fiber base material, followed by melting and impregnation; a method comprising dissolving a polyarylene sulfide copolymer in a solvent, impregnating the dissolved polyarylene sulfide copolymer into a reinforcing fiber base material, and then evaporating the solvent; a method comprising making a polyarylene sulfide copolymer into a fiber, and forming a commingled yarn with a discontinuous fiber; a method comprising impregnating a polyarylene sulfide copolymer precursor into a reinforcing fiber base material, polymerizing it to form a polyarylene sulfide copolymer; and a method comprising lamination using a meltblown nonwoven fabric. Any of the methods may be used. The method comprising feeding a polyarylene sulfide copolymer using an extruder and impregnating it into a reinforcing fiber base material has an advantage that there is no need to process a polyarylene sulfide copolymer. The method comprising dispersing and melting a powdered polyarylene sulfide copolymer into the fiber layer of a reinforcing fiber base material has an advantage of ease of impregnation. The method comprising making a polyarylene sulfide copolymer into a film, and laminating it with a reinforcing fiber base material has an advantage that relatively good quality can be achieved. In one preferred embodiment of the second aspect of the present invention, a reinforcing fiber base material with discontinuous fibers dispersed therein can also be impregnated with a polyarylene sulfide copolymer by impregnating a reinforcing fiber base material with discontinuous fibers dispersed therein with an (A) arylene sulfide prepolymer and a (B) compound, and then heating them.

According to the second aspect of the present invention, the thickness of the fiber-reinforced polyarylene sulfide copolymer composite base material is preferably from 0.1 to 10 mm. When the thickness is 0.1 mm or more, the strength of the molded article obtained using the fiber-reinforced polyarylene sulfide copolymer composite base material can be increased. More preferably, the thickness is 1 mm or more. When the thickness is 10 mm or less, a reinforcing fiber is more easily impregnated with a polyarylene sulfide copolymer. The thickness is more preferably 7 mm or less, and still more preferably 5 mm or less.

According to the second aspect of the present invention, the volume fraction of the fiber-reinforced polyarylene sulfide copolymer composite base material is preferably from 20 to 70% by volume. In other words, the discontinuous fibers are preferably contained in an amount of 20% by volume or more and 70% by volume or less based on the entire

fiber-reinforced polyarylene sulfide copolymer composite base material (100% by volume). When the discontinuous fibers are contained in an amount of 20% by volume or more, the strength of the molded article obtained using the fiber-reinforced polyarylene sulfide copolymer composite base material can be increased. More preferably, the volume fraction is 30% by volume or more. When the discontinuous fibers are contained in an amount of 70% by volume or less, the discontinuous fibers are more easily impregnated with the polyarylene sulfide copolymer. The volume fraction is more preferably 60% by volume or less, and still more preferably 50% by volume or less. The volume fraction can be calculated according to the formula (IV) described above.

According to the second aspect of the present invention, the method to adjust the thickness or volume fraction of the base material into a desired one in manufacturing of a fiber-reinforced polyarylene sulfide copolymer composite base material may be, for example, a heat press method using a press machine. Any press machine can be used that can provide a required temperature and pressure for impregnation of a polyarylene sulfide copolymer, including a common press machine with a flat platen that moves up and down, or a so-called double belt press machine with a mechanism in which a pair of continuous steel belts run.

According to the first and second aspects of the present invention, one or more fiber-reinforced polyarylene sulfide copolymer composite base materials can be stacked in an arbitrary structure, and then molded while being subjected to heat and/or pressure as necessary to obtain a molded article.

The method to apply heat and/or pressure may be, for example, a press-molding method comprising placing fiber-reinforced polyarylene sulfide copolymers stacked with an arbitrary structure in a mold or on a press plate, and applying pressure by closing the mold or the press plate; an autoclave molding method comprising feeding molding materials stacked with an arbitrary structure into an autoclave, and applying pressure and heat; a bag-molding method comprising wrapping molding materials stacked with an arbitrary structure with a film or the like, and heating them in an oven while applying the atmospheric pressure with the internal pressure reduced; a wrapping tape method comprising wrapping fiber-reinforced polyarylene sulfide copolymers stacked in an arbitrary structure with a tape with tension, and heating them in an oven; or an internal pressure molding method comprising placing fiber-reinforced polyarylene sulfide copolymers stacked in an arbitrary structure in a mold, injecting a gas or a liquid into a core placed in the same mold, and then applying pressure. Especially, a molding method comprising pressing with a mold is preferably used because it provides a molded article with fewer voids in the obtained molded article and excellent appearance quality.

The press-molding method may be, for example, a hot-pressing method comprising first placing a fiber-reinforced polyarylene sulfide copolymer composite base material in a mold; then applying pressure and heat along with mold clamping; then cooling the mold while continuing the mold clamping to cool the fiber-reinforced polyarylene sulfide copolymer composite base material, and thereby obtaining a molded article; or a stamping molding method comprising first heating a fiber-reinforced polyarylene sulfide copolymer composite base material above the melting temperature of the polyarylene sulfide copolymer with a heating device, such as a far-infrared heater, a heating plate, a high-temperature oven, or a dielectric heater; then placing the melted and softened polyarylene sulfide copolymer on a mold that is the lower surface of a molding mold as described above; and then closing and clamping the mold; and thereafter pressurizing and cooling the mold. The press-molding method is not particularly limited, and stamping molding is preferable from the viewpoint of improving the productivity by speeding up the molding cycle. According to the first and second aspects of the present invention, the fiber-reinforced polyarylene sulfide copolymer composite base material and the molded article can be subject to integral molding such as insert molding or outsert molding, or can be integrated using highly productive bonding methods and adhesives, such as thermal correction, thermal welding, vibration welding, and ultrasonic welding, thereby providing a combined product.

According to the first and second aspects of the present invention, the fiber-reinforced polyarylene sulfide copolymer composite base material is preferably joined at least in part with a molded article comprising a thermoplastic resin to form a combined molded article.

According to the first and second aspects of the present invention, the fiber-reinforced polyarylene sulfide copolymer composite base material is integrated with any molded article comprising a thermoplastic resin (molding base material and molded article), including resin materials and molded articles therefrom, metal materials and molded articles therefrom, and inorganic materials and molded articles therefrom. Of these, resin materials and molded articles therefrom are preferable in terms of adhesive strength with the fiber-reinforced polyarylene sulfide copolymer the present invention.

According to the first and second aspects of the present invention, the matrix resin in the molding material and molded article to be integrated with the fiber-reinforced polyarylene sulfide copolymer composite base material may be the same type of resin as or different type of resin from the fiber-reinforced polyarylene sulfide copolymer composite base material and the molded article therefrom. A same type of resin is preferable in order to further increase the adhesive strength. When using a different type of resin, it is more preferable to provide a resin layer at the interface.

Example

The methods in the present invention will be described in more detail with reference to Examples, Reference

Examples, and Comparative Examples, but are not limited thereto.

[Measurement of Glass Transition Temperature and Melting Point]

The glass transition temperature (Tg) and the melting point (Tm) were measured by melting and molding a fiber-reinforced polyarylene sulfide copolymer composite base material at 320°C, rapidly cooling it to the room temperature, and analyzing the obtained film using a differential scanning calorimeter (DSC7, PerkinElmer, Inc.) under the following conditions:

· The flexion point in the baseline shift detected when the temperature is elevated from 0°C to 340°C at a rate of 20°C/min was considered as the glass transition temperature.
· After reaching 340°C as described above, the temperature was held at 340°C for 1 minute, cooled to 100°C at a rate of 20°C/min, and held for 1 minute. The melting peak temperature value detected when the temperature was elevated again from 100°C to 340°C at a rate of 20°C/min was considered as the melting point.

[Solvent Resistance Test]

The fiber-reinforced polyarylene sulfide copolymer composite base material was cut into 1 cm × 1 cm pieces, and immersed in 100 g of N-methyl-2-pyrrolidone (hereinafter, called "NMP") that had been heated to 80°C. After keeping the liquid temperature at 80°C for 20 minutes, the dissolution state of the base material was visually checked. The results of the solvent resistance test were evaluated according to the following criteria:

A: no change (keeping the shape);
B: swelling;
C: fiber opening (resin dissolution).

[Measurement of Molecular Weight]

The fiber-reinforced polyarylene sulfide copolymer composite base material was immersed in 1-chloronaphthalene at 250°C with shaking for 5 minutes, and then filtered through a membrane filter with a pore size of 1 μm, thereby recovering the filtrate. The number average molecular weights (Mn) and the weight average molecular weights (Mw) of polyarylene sulfide and the polyarylene sulfide copolymer in the filtrate were calculated in terms of polystyrene by gel permeation chromatography (GPC), a type of size exclusion chromatography (SEC). The measurement conditions in GPC are shown below:

GPC measurement apparatus: SSC-7110, manufactured from Senshu Scientific Co., Ltd.
Column: Shodex UT806M ×2
Eluent: 1-chloronaphthalene
Detector: differential refractive index detector
Temperature of Column: 210°C
Temperature of Pre Oven: 250°C
Temperature of Pump Oven: 50°C
Temperature of Detector: 210°C
Flow Rate: 1.0 mL/min
Sample Injection: 300 μL.

[Measurement of Storage Modulus Reduction Temperature]

The temperature dependence of storage modulus of fiber-reinforced polyarylene sulfide copolymer composite base material was determined using a viscoelasticity measuring device under the following conditions:

Equipment: DMS6100 (Seiko Instruments Inc.)
Measurement Mode: tensile mode
Frequency: 1.0 Hz
Sampling Rate: 3.0 s
Sample: prepared by cutting the base material into 8 mm × 20 mm pieces.
Atmosphere: under a nitrogen gas flow (100 mL/min)
Measurement Conditions: the programmed temperature was elevated from 50°C to 250°C at a temperature elevating

rate of 2°C/min.

The temperature at which the storage modulus E' was 90% of the E' value at 50°C was considered as $T_{90}$, which was considered as an index of the temperature at which the storage modulus decreases.

[Prepolymer (A-1)]

To a 70-L autoclave equipped with a stirrer and a bottom stop valve, 8.27 kg (70.0 mol) of 47.5% sodium hydrosulfide, 3.14 kg (75.5 mol) of 96% sodium hydroxide, 11.45 kg (115.50 mol) of NMP, and 5.5 kg of ion exchanged water were added. The mixture was slowly heated to 225°C for about 3 hours at the atmospheric pressure under a nitrogen gas flow. At the time when 9.82 kg of water and 0.28 kg of NMP were evaporated off, the heating was finished and cooling was started. The amount of water remaining in the system at this time per mole of alkali metal hydrosulfide added, including water consumed in NMP hydrolysis, was 1.01 mol. The amount of hydrogen sulfide scattered was 1.4 mol, and thus the amount of the sulfurizing agent in the system after this step was 68.6 mol.

After cooling to 200°C and adding 9.28 kg (65.1 mol) of p-dichlorobenzene (hereinafter, called "p-DCB"), 2.88 kg (15.8 mol) of 4-chlorophthalic anhydride, and 9.37 kg (94.50 mol) of NMP, the reactor was sealed under nitrogen gas, and heated to 275°C at a rate of 0.6°C/min with stirring at 240 rpm, and the mixture was allowed to react at 275°C for 60 minutes.

After completion of the reaction, the bottom stop valve of the autoclave was immediately opened to flash the content into an apparatus with a stirrer. In the apparatus with a stirrer, the content was evaporated to dryness at 230°C for 1.5 hours until 95% or more of NMP used in polymerization was removed to obtain a solid containing PPS and salts.

The obtained recovery and 74 L of ion exchange water were added to an autoclave with a stirrer, washed at 75°C for 15 minutes, and filtered to obtain a cake. After washing the obtained cake with ion exchanged water at 75°C for 15 minutes and filtering it for 3 times, the cake, 74 L of ion exchanged water, and 0.5 kg of acetic acid were added to an autoclave with a stirrer. After replacing the inside of the autoclave with nitrogen, the temperature was elevated to 195°C. Then, the autoclave was cooled and the content was recovered. The content was filtered to obtain a cake. The obtained cake was dried at 120°C for 4 hours under a nitrogen gas flow to obtain an anhydrous arylene sulfide prepolymer (A-1). The arylene sulfide prepolymer (A-1) had a glass transition temperature of 80.2°C, a melting point of 272.7°C, and a number average molecular weight of 4,500. The FT-IR spectrum revealed that the arylene sulfide prepolymer (A-1) had a phenylene sulfide unit as a constitutional unit and had an acid anhydride group introduced therein.

[PAS Copolymer-1]

First, 4 g (terminal acid anhydride: 2.0 mmol) of the arylene sulfide prepolymer (A-1) and 0.25 g (1.0 mmol) of 4,4'-diaminodiphenylsulfone (hereinafter, called "DDS") were added in a glass test tube with an agitator blade that can be vacuumed and nitrogen-replaced, which was then vacuumed and nitrogen-replaced three times. Keeping the test tube filled with a nitrogen atmosphere, the mixture was heated at an adjusted temperature of 320°C for 20 minutes with stirring, and then cooled to the room temperature to obtain a polymerized product. The FT-IR spectrum revealed that the obtained polymerized product contained a phenylene sulfide unit as a structural unit and had imide and sulfonyl groups derived from the copolymer component introduced therein. The obtained polyphenylene sulfide copolymer contained 2.5 mol% of the copolymer component.

The number average molecular weight of the phenylene sulfide unit constituting the obtained polyphenylene sulfide copolymer is the same as that of the arylene sulfide prepolymer (A-1) used in the polymerization. The same applies to PAS copolymers 2 to 17 below.

[PAS Copolymer-2]

First, 4 g (terminal acid anhydride: 2.0 mmol) of the arylene sulfide prepolymer (A-1) and 0.21 g (1.0 mmol) of 4,4'-diaminobenzophenone (DAB) were added in a glass test tube with an agitator blade that can be vacuumed and nitrogen-replaced, which was then vacuumed and nitrogen-replaced three times. Keeping the test tube filled with a nitrogen atmosphere, the mixture was heated at an adjusted temperature of 320°C for 20 minutes with stirring, and then cooled to the room temperature to obtain a polymerized product. The FT-IR spectrum revealed that this product contained a phenylene sulfide unit as a structural unit and had imide and ketone groups derived from the copolymer component introduced therein. The obtained polyphenylene sulfide copolymer contained 2.3 mol% of the copolymer component.

[PAS Copolymer-3]

First, 4 g (terminal acid anhydride: 2.0 mmol) of the arylene sulfide prepolymer (A-1) and 0.20 g (1.0 mmol) of 2,7-diaminofluorene (DAF) were added in a glass test tube with an agitator blade that can be vacuumed and nitrogen-replaced,

which was then vacuumed and nitrogen-replaced three times. Keeping the test tube filled with a nitrogen atmosphere, the mixture was heated at an adjusted temperature of 320°C for 20 minutes with stirring, and then cooled to the room temperature to obtain a polymerized product. The FT-IR spectrum revealed that this product contained a phenylene sulfide unit as a structural unit and had an imide group derived from the copolymer component introduced therein. The obtained polyphenylene sulfide copolymer contained 2.4 mol% of the copolymer component.

[PAS Copolymer-4]

First, 4 g (terminal acid anhydride: 2.0 mmol) of the arylene sulfide prepolymer (A-1) and 0.16 g (1.0 mmol) of 1,4-diaminonaphthalene (14DAN) were added in a glass test tube with an agitator blade that can be vacuumed and nitrogen-replaced, which was then vacuumed and nitrogen-replaced three times. Keeping the test tube filled with a nitrogen atmosphere, the mixture was heated at an adjusted temperature of 320°C for 20 minutes with stirring, and then cooled to the room temperature to obtain a polymerized product. The FT-IR spectrum revealed that this product contained a phenylene sulfide unit as a structural unit and had an imide group derived from the copolymer component introduced therein. The obtained polyphenylene sulfide copolymer contained 2.4 mol% of the copolymer component.

[PAS Copolymer-5]

First, 4 g (terminal acid anhydride: 2.0 mmol) of the arylene sulfide prepolymer (A-1), and 0.16 g (1.0 mmol) of 1,5-diaminonaphthalene (15DAN) were added in a glass test tube with an agitator blade that can be vacuumed and nitrogen-replaced, which was then vacuumed and nitrogen-replaced three times. Keeping the test tube filled with a nitrogen atmosphere, the mixture was heated at an adjusted temperature of 320°C for 20 minutes with stirring, and then cooled to the room temperature to obtain a polymerized product. The FT-IR spectrum revealed that this product contained a phenylene sulfide unit as a structural unit and had an imide group derived from the copolymer component introduced therein. The obtained polyphenylene sulfide copolymer contained 2.3 mol% of the copolymer component.

[Prepolymer (A-2)]

To a 70-L autoclave equipped with a stirrer and a bottom stop valve, 8.27 kg (70.0 mol) of 47.5% sodium hydrosulfide, 3.14 kg (75.5 mol) of 96% sodium hydroxide, 11.45 kg (115.50 mol) of NMP, and 5.5 kg of ion exchanged water were added. The mixture was slowly heated to 225°C for about 3 hours at the atmospheric pressure under a nitrogen gas flow. At the time when 9.82 kg of water and 0.28 kg of NMP were evaporated off, the heating was finished and cooling was started. The amount of water remaining in the system at this time per mole of alkali metal hydrosulfide added, including water consumed in NMP hydrolysis, was 1.01 mol. The amount of hydrogen sulfide scattered was 1.4 mol, and thus the amount of the sulfurizing agent in the system after this step was 68.6 mol.

After cooling to 200°C and adding 9.28 kg (65.1 mol) of p-DCB, 2.47 kg (15.8 mol) of 4-chlorobenzoic acid, and 9.37 kg (94.50 mol) of NMP, the reactor was sealed under nitrogen gas, and heated to 275°C at a rate of 0.6°C/min with stirring at 240 rpm, and the mixture was allowed to react at 275°C for 60 minutes.

After completion of the reaction, the bottom stop valve of the autoclave was immediately opened to flash the content into an apparatus with a stirrer. In the apparatus with a stirrer, the content was evaporated to dryness at 230°C for 1.5 hours until 95% or more of NMP used in polymerization was removed to obtain a solid containing PPS and salts.

The obtained recovery and 74 L of ion exchange water were added to an autoclave with a stirrer, washed at 75°C for 15 minutes, and filtered to obtain a cake. After washing the obtained cake with ion exchanged water at 75°C for 15 minutes and filtering it for 3 times, the cake, 74 L of ion exchanged water, and 0.5 kg of acetic acid were added to an autoclave with a stirrer. After replacing the inside of the autoclave with nitrogen, the temperature was elevated to 195°C. Then, the autoclave was cooled and the content was recovered. The content was filtered to obtain a cake. The obtained cake was dried at 120°C for 4 hours under a nitrogen gas flow to obtain an anhydrous arylene sulfide prepolymer (A-2). The arylene sulfide prepolymer (A-2) had a glass transition temperature of 79.6°C, a melting point of 270.6°C, and a number average molecular weight of 3,900. The FT-IR spectrum revealed that the arylene sulfide prepolymer (A-2) had a phenylene sulfide unit as a constitutional unit and had a carboxyl group introduced therein.

[PAS Copolymer-6]

First, 4 g (terminal acid anhydride: 2.2 mmol) of the arylene sulfide prepolymer (A-2), and 0.273 g (1.1 mmol) of DDS were added in a glass test tube with an agitator blade that can be vacuumed and nitrogen-replaced, which was then vacuumed and nitrogen-replaced three times. Keeping the test tube filled with a nitrogen atmosphere, the mixture was heated at an adjusted temperature of 320°C for 20 minutes with stirring, and then cooled to the room temperature to obtain a polymerized product. The FT-IR spectrum revealed that this product contained a phenylene sulfide unit as a structural unit

unit and had an amide group derived from the copolymer component introduced therein. The obtained polyphenylene sulfide copolymer contained 2.7 mol% of the copolymer component.

[PPS-1]

To a 70-L autoclave equipped with a stirrer and a bottom stop valve, 8.27 kg (70.00 mol) of 47.5% sodium hydrosulfide, 2.91 kg (69.80 mol) of 96% sodium hydroxide, 11.45 kg (115.50 mol) of NMP, and 10.5 kg of ion exchanged water were added. The mixture was slowly heated to 245°C for about 3 hours at the atmospheric pressure under a nitrogen gas flow. At the time when 14.78 kg of water and 0.28 kg of NMP were evaporated off, the reactor was cooled to 200°C. The amount of water remaining in the system per mole of alkali metal sulfide added, including water consumed in NMP hydrolysis, was 1.06 mol. The amount of hydrogen sulfide scattered was 0.02 mol per mole of alkali metal sulfide added.

After cooling to 200°C and adding 10.48 kg (71.27 mol) of p-DCB and 9.37 kg (94.50 mol) of NMP, the reactor was sealed under nitrogen gas, and heated from 200°C to 270°C at a rate of 0.6°C/min with stirring at 240 rpm. After the reaction at 270°C for 100 minutes, the bottom stop valve of the autoclave was opened and the content was flashed into a vessel with a stirrer under pressure with nitrogen over 15 minutes. The content was stirred at 250°C for a period of time until most of NMP was removed.

The obtained solid and 76 L of ion exchange water were added to an autoclave with a stirrer, washed at 70°C for 30 minutes, and subjected to suction filtration with a glass filter. Then, 76 L of ion exchange water heated to 70°C was poured into the glass filter, and suction filtration was performed to obtain a cake.

The obtained cake and 90 L of ion exchanged water were added to an autoclave with a stirrer, then acetic acid was added to adjust the pH to 7. After replacing the inside of the autoclave with nitrogen, the temperature was elevated to 192°C and held for 30 minutes. Then, the autoclave was cooled and the content was recovered.

The content was suction-filtered through a glass filter, to which 76 L of ion exchange water at 70°C was poured and suction-filtered to obtain a cake. The obtained cake was dried at 120°C under a nitrogen gas flow to obtain PPS-1.

[PPS-2]

To a 70-L autoclave equipped with a stirrer and a bottom stop valve, 8,267.37 g (70.00 mol) of 47.5% sodium hydrosulfide, 2,957.21 g (70.97 mol) of 96% sodium hydroxide, 11,434.50 g (115.50 mol) of NMP, 2,583.00 g (31.50 mol) of sodium acetate, and 10,500 g of ion exchanged water were added. The mixture was slowly heated to 245°C for about 3 hours at the atmospheric pressure under a nitrogen gas flow. At the time when 14,780.1 g of water and 280 g of NMP were evaporated off, the reactor was cooled to 160°C. The amount of water remaining in the system per mole of alkali metal sulfide added, including water consumed in NMP hydrolysis, was 1.06 mol. The amount of hydrogen sulfide dispersed was 0.02 mol per mole of alkali metal sulfide added.

After adding 10,235.46 g (69.63 mol) of p-DCB and 9,009.00 g (91.00 mol) of NMP, the reactor was sealed under nitrogen gas, and heated to 238°C at a rate of 0.6°C/min with stirring at 240 rpm. After the reaction at 238°C for 95 minutes, the reaction mixture was heated to 270°C at a rate of 0.8°C/min. After the reaction at 270°C for 100 minutes, the reaction mixture was cooled to 250°C at a rate of 1.3°C/min with injection of 1,260 g (70 mol) of water under pressure over 15 minutes. The reaction mixture was cooled to 200°C at a rate of 1.0°C/min and then rapidly cooled to around room temperature.

The content was recovered, diluted with 26,300 g of NMP, filtered through a sieve (80 mesh) to separate the solvent and a solid, and the obtained particles were washed with 31,900 g of NMP and separated by filtration. The resulting product was washed several times with 56,000 g of ion exchanged water and separated by filtration. After washed with 70,000 g of ion exchanged water and separated by filtration, the obtained hydrous PPS particles were hot-air dried at 80°C and then vacuum-dried at 120°C to obtain PPS-2.

[Prepolymer (A-3)]

First, 80 g of PPS-1 and 20 g of 4,4'-thiodianiline (hereinafter, called "TDA") were added in a glass test tube with an agitator blade that can be vacuumed and nitrogen-replaced, which was then vacuumed and nitrogen-replaced three times. Keeping the test tube filled with a nitrogen atmosphere, the mixture was heated at an adjusted temperature of 340°C for 60 minutes with stirring. The test tube was vacuumed at an adjusted temperature of 320°C for 15 minutes with stirring to remove the residual TDA, thereby obtaining an arylene sulfide prepolymer (A-3). The arylene sulfide prepolymer had a glass transition temperature of 58.9°C, a melting point of 270.7°C, and a number average molecular weight of 2,400. The FT-IR spectrum revealed that the arylene sulfide prepolymer (A-3) had a phenylene sulfide unit as a constitutional unit and had an amino group introduced therein.

[Prepolymer (A-4)]

First, 80 g of PPS-2 and 12 g of TDA were added in a glass test tube with an agitator blade that can be vacuumed and nitrogen-replaced, which was then vacuumed and nitrogen-replaced three times. Keeping the test tube filled with a nitrogen atmosphere, the mixture was heated at an adjusted temperature of 340°C for 180 minutes with stirring to obtain an arylene sulfide prepolymer (A-4). The arylene sulfide prepolymer had a glass transition temperature of 59.1°C, a melting point of 271.3°C, and a number average molecular weight of 2,500. The FT-IR spectrum revealed that the arylene sulfide prepolymer (A-4) had a phenylene sulfide unit as a constitutional unit and had an amino group introduced therein.

[Prepolymer (A-5)]

First, 80 g of PPS-2 and 18 g of 3,3',4,4'-thiodiphthalic dianhydride (hereinafter, called "TPDA") were added in a glass test tube with an agitator blade that can be vacuumed and nitrogen-replaced, which was then vacuumed and nitrogen-replaced three times. Keeping the test tube filled with a nitrogen atmosphere, the mixture was heated at an adjusted temperature of 340°C for 180 minutes with stirring to obtain an arylene sulfide prepolymer (A-5). The arylene sulfide prepolymer had a glass transition temperature of 61.3°C, a melting point of 269.1°C, and a number average molecular weight of 2,600. The FT-IR spectrum revealed that the arylene sulfide prepolymer (A-5) had a phenylene sulfide unit as a constitutional unit and had an acid anhydride group introduced therein.

[Prepolymer (A-6)]

First, 80 g of PPS-1 and 25 g of TDA were added in a glass test tube with an agitator blade that can be vacuumed and nitrogen-replaced, which was then vacuumed and nitrogen-replaced three times. Keeping the test tube filled with a nitrogen atmosphere, the mixture was heated at an adjusted temperature of 340°C for 180 minutes with stirring to obtain an arylene sulfide prepolymer (A-6). The arylene sulfide prepolymer had a glass transition temperature of 56.7°C, a melting point of 271.2°C, and a number average molecular weight of 1,100. The FT-IR spectrum revealed that the arylene sulfide prepolymer (A-6) had a phenylene sulfide unit as a constitutional unit and had an amino group introduced therein.

[PAS Copolymer-7]

First, 4 g (terminal amino group: 4.8 mmol) of arylene sulfide prepolymer (A-3) and 0.52 g (2.4 mmol) of pyromellitic dianhydride (hereinafter, called "PDA") were added in a glass test tube with an agitator blade that can be vacuumed and nitrogen-replaced, which was then vacuumed and nitrogen-replaced three times. Keeping the test tube filled with a nitrogen atmosphere, the mixture was heated at an adjusted temperature of 320°C for 5 minutes with stirring, and then cooled to the room temperature to obtain a polymerized product. The FT-IR spectrum revealed that this product contained a phenylene sulfide unit as a structural unit and had an imide group derived from the copolymer component introduced therein. The obtained polyphenylene sulfide copolymer contained 4.3 mol% of the copolymer component.

[PAS Copolymer-8]

First, 4 g (terminal amino group: 4.3 mmol) of arylene sulfide prepolymer (A-4) and 0.48 g (2.2 mmol) of PDA were added in a glass test tube with an agitator blade that can be vacuumed and nitrogen-replaced, which was then vacuumed and nitrogen-replaced three times. Keeping the test tube filled with a nitrogen atmosphere, the mixture was heated at an adjusted temperature of 320°C for 5 minutes with stirring, and then cooled to the room temperature to obtain a polymerized product. The FT-IR spectrum revealed that this product contained a phenylene sulfide unit as a structural unit and had an imide group derived from the copolymer component introduced therein. The obtained polyphenylene sulfide copolymer contained 4.4 mol% of the copolymer component.

[PAS Copolymer-9]

First, 4 g (terminal amino group: 4.3 mmol) of arylene sulfide prepolymer (A-4) and 0.71 g (2.2 mmol) of 3,3',4,4'-benzophenonetetracarboxylic dianhydride (BTDA) were added in a glass test tube with an agitator blade that can be vacuumed and nitrogen-replaced, which was then vacuumed and nitrogen-replaced three times. Keeping the test tube filled with a nitrogen atmosphere, the mixture was heated at an adjusted temperature of 320°C for 5 minutes with stirring, and then cooled to the room temperature to obtain a polymerized product. The FT-IR spectrum revealed that this product contained a phenylene sulfide unit as a structural unit and had an imide group derived from the copolymer component introduced therein. The obtained polyphenylene sulfide copolymer contained 4.2 mol% of the copolymer component.

[PAS Copolymer-10]

First, 4 g (terminal amino group: 4.3 mmol) of arylene sulfide prepolymer (A-4) and 0.65 g (2.2 mmol) of 3,3',4,4'-biphenyltetracarboxylic dianhydride (BPDA) were added in a glass test tube with an agitator blade that can be vacuumed and nitrogen-replaced, which was then vacuumed and nitrogen-replaced three times. Keeping the test tube filled with a nitrogen atmosphere, the mixture was heated at an adjusted temperature of 320°C for 5 minutes with stirring, and then cooled to the room temperature to obtain a polymerized product. The FT-IR spectrum revealed that this product contained a phenylene sulfide unit as a structural unit and had an imide group derived from the copolymer component introduced therein. The obtained polyphenylene sulfide copolymer contained 4.3 mol% of the copolymer component.

[PAS Copolymer-11]

First, 4 g (terminal amino group: 4.3 mmol) of arylene sulfide prepolymer (A-4) and 0.79 g (2.2 mmol) of 3,3',4,4'-diphenylsulfonetetracarboxylic dianhydride (hereinafter, called "DSDA") were added in a glass test tube with an agitator blade that can be vacuumed and nitrogen-replaced, which was then vacuumed and nitrogen-replaced three times. Keeping the test tube filled with a nitrogen atmosphere, the mixture was heated at an adjusted temperature of 320°C for 5 minutes with stirring, and then cooled to the room temperature to obtain a polymerized product. The FT-IR spectrum revealed that this product contained a phenylene sulfide unit as a structural unit and had an imide group derived from the copolymer component introduced therein. The obtained polyphenylene sulfide copolymer contained 4.4 mol% of the copolymer component.

[PAS Copolymer-12]

First, 4 g (terminal amino group: 4.3 mmol) of arylene sulfide prepolymer (A-4) and 1.01 g (2.2 mmol) of 9,9-bis(3,4-carboxyphenyl)fluorene dianhydride (hereinafter, called "BPAF") were added in a glass test tube with an agitator blade that can be vacuumed and nitrogen-replaced, which was then vacuumed and nitrogen-replaced three times. Keeping the test tube filled with a nitrogen atmosphere, the mixture was heated at an adjusted temperature of 320°C for 5 minutes with stirring, and then cooled to the room temperature to obtain a polymerized product. The FT-IR spectrum revealed that this product contained a phenylene sulfide unit as a structural unit and had an imide group derived from the copolymer component introduced therein. The obtained polyphenylene sulfide copolymer contained 4.3 mol% of the copolymer component.

[PAS Copolymer-13]

First, 4 g (terminal acid anhydride group: 4.2 mmol) of arylene sulfide prepolymer (A-5) and 0.52 g (2.1 mmol) of DDS were added in a glass test tube with an agitator blade that can be vacuumed and nitrogen-replaced, which was then vacuumed and nitrogen-replaced three times. Keeping the test tube filled with a nitrogen atmosphere, the mixture was heated at an adjusted temperature of 320°C for 5 minutes with stirring, and then cooled to the room temperature to obtain a polymerized product. The FT-IR spectrum revealed that this product contained a phenylene sulfide unit as a structural unit and had an imide group derived from the copolymer component introduced therein. The obtained polyphenylene sulfide copolymer contained 4.2 mol% of the copolymer component.

[PAS Copolymer-14]

First, 4 g (terminal amino group: 7.6 mmol) of arylene sulfide prepolymer (A-6) and 1.74 g (3.8 mmol) of BPAF were added in a glass test tube with an agitator blade that can be vacuumed and nitrogen-replaced, which was then vacuumed and nitrogen-replaced three times. Keeping the test tube filled with a nitrogen atmosphere, the mixture was heated at an adjusted temperature of 320°C for 5 minutes with stirring, and then cooled to the room temperature to obtain a polymerized product. The FT-IR spectrum revealed that this product contained a phenylene sulfide unit as a structural unit and had an imide group derived from the copolymer component introduced therein. The obtained polyphenylene sulfide copolymer contained 8.0 mol% of the copolymer component.

[PPS-3]

To a 70-L autoclave equipped with a stirrer and a bottom stop valve, 8,267.37 g (70.00 mol) of 47.5% sodium hydrosulfide, 2,957.21 g (70.97 mol) of 96% sodium hydroxide, 11,434.50 g (115.50 mol) of NMP, 3,158.54 g (38.50 mol) of sodium acetate, and 10,500 g of ion exchanged water were added. The mixture was slowly heated to 245°C for about 3 hours at the atmospheric pressure under a nitrogen gas flow. At the time when 14,780.1 g of water and 280 g of NMP were

evaporated off, the reactor was cooled to 160°C. The amount of water remaining in the system per mole of alkali metal sulfide added, including water consumed in NMP hydrolysis, was 1.06 mol. The amount of hydrogen sulfide dispersed was 0.02 mol per mole of alkali metal sulfide added.

After adding 10,235.46 g (69.63 mol) of p-DCB and 9,009.00 g (91.00 mol) of NMP, the reactor was sealed under nitrogen gas, and heated to 238°C at a rate of 0.6°C/min with stirring at 240 rpm. After the reaction at 238°C for 95 minutes, the reaction was heated to 270°C at a rate of 0.8°C/min. After the reaction at 270°C for 100 minutes, the reaction was cooled to 250°C at a rate of 1.3°C/min with injection of 1,260 g (70 mol) of water under pressure over 15 minutes. The reaction was cooled to 200°C at a rate of 1.0°C/min and then rapidly cooled to around room temperature.

The content was recovered, diluted with 26,300 g of NMP, filtered through a sieve (80 mesh) to separate the solvent and a solid, and the obtained particles were washed with 31,900 g of NMP and separated by filtration. The resulting product was washed several times with 56,000 g of ion exchanged water and separated by filtration. After washed with 70,000 g of ion exchanged water and separated by filtration, the obtained hydrous PPS particles were hot-air dried at 80°C and then vacuum-dried at 120°C to obtain PPS-3.

[Prepolymer (A-7)]

First, 80 g of PPS-3 and 12 g of TDA were added in a glass test tube with an agitator blade that can be vacuumed and nitrogen-replaced, which was then vacuumed and nitrogen-replaced three times. Keeping the test tube filled with a nitrogen atmosphere, the mixture was heated at an adjusted temperature of 340°C for 180 minutes with stirring to obtain an arylene sulfide prepolymer (A-7). The arylene sulfide prepolymer had a glass transition temperature of 59.3°C, a melting point of 270.7°C, and a number average molecular weight of 2,500. The FT-IR spectrum revealed that the arylene sulfide prepolymer (A-7) had a phenylene sulfide unit as a constitutional unit and had an amino group introduced therein.

[Prepolymer (A-8)]

An anhydrous arylene sulfide prepolymer (A-8) was obtained in the same manner as the prepolymer (A-1) except that drying at 120°C was replaced with drying at 30°C for 4 hours using a vacuum dryer. The arylene sulfide prepolymer (A-7) had a glass transition temperature of 80.1°C, a melting point of 272.5°C, and a number average molecular weight of 4,500. The FT-IR spectrum revealed that the arylene sulfide prepolymer (A-8) had a phenylene sulfide unit as a constitutional unit and had a carboxyl group introduced therein.

[PAS Copolymer-15]

First, 4 g (terminal amino group: 4.3 mmol) of arylene sulfide prepolymer (A-7) and 0.48 g (2.2 mmol) of PDA were added in a glass test tube with an agitator blade that can be vacuumed and nitrogen-replaced, which was then vacuumed and nitrogen-replaced three times. Keeping the test tube filled with a nitrogen atmosphere, the mixture was heated at an adjusted temperature of 320°C for 5 minutes with stirring, and then cooled to the room temperature to obtain a polymerized product. The FT-IR spectrum revealed that this product contained a phenylene sulfide unit as a structural unit and had an imide group derived from the copolymer component introduced therein. The obtained polyphenylene sulfide copolymer contained 4.3 mol% of the copolymer component.

[PAS Copolymer-16]

First, 4 g (terminal amino group: 4.3 mmol) of arylene sulfide prepolymer (A-4) and 0.56 g (2.2 mmol) of pyromellitic acid (PA) were added in a glass test tube with an agitator blade that can be vacuumed and nitrogen-replaced, which was then vacuumed and nitrogen-replaced three times. Keeping the test tube filled with a nitrogen atmosphere, the mixture was heated at an adjusted temperature of 320°C for 5 minutes with stirring, and then cooled to the room temperature to obtain a polymerized product. The FT-IR spectrum revealed that this product contained a phenylene sulfide unit as a structural unit and had an imide group derived from the copolymer component introduced therein. The obtained polyphenylene sulfide copolymer contained 4.4 mol% of the copolymer component.

[PAS Copolymer-17]

First, 4 g (terminal carboxyl group: 4.0 mmol) of arylene sulfide prepolymer (A-8) and 0.25 g (1.0 mmol) of DDS were added in a glass test tube with an agitator blade that can be vacuumed and nitrogen-replaced, which was then vacuumed and nitrogen-replaced three times. Keeping the test tube filled with a nitrogen atmosphere, the mixture was heated at an adjusted temperature of 320°C for 20 minutes with stirring, and then cooled to the room temperature to obtain a polymerized product. The FT-IR spectrum revealed that the obtained polymerized product contained a phenylene sulfide

unit as a structural unit and had imide and sulfonyl groups derived from the copolymer component introduced therein. The obtained polyphenylene sulfide copolymer contained 2.5 mol% of the copolymer component.

[PAS Copolymer-18]

First, 4 g (terminal amino group: 4.3 mmol) of arylene sulfide prepolymer (A-4) and 0.60 g (2.2 mmol) of 4,4'-thiodibenzoic acid (TDBA) were added in a glass test tube with an agitator blade that can be vacuumed and nitrogen-replaced, which was then vacuumed and nitrogen-replaced three times. Keeping the test tube filled with a nitrogen atmosphere, the mixture was heated at an adjusted temperature of 320°C for 5 minutes with stirring, and then cooled to the room temperature to obtain a polymerized product. The FT-IR spectrum revealed that this product contained a phenylene sulfide unit as a structural unit and had an amide group derived from the copolymer component introduced therein. The obtained polyphenylene sulfide copolymer contained 4.2 mol% of the copolymer component.

[PAS Copolymer-19]

First, 2.16 g (5.0 mmol) of diamine represented by the following formula V and 1.63 g (5.0 mmol) of TPDA were added in a glass test tube with an agitator blade that can be vacuumed and nitrogen-replaced, which was then vacuumed and nitrogen-replaced three times. Keeping the test tube filled with a nitrogen atmosphere, the mixture was heated at an adjusted temperature of 320°C for 20 minutes with stirring, and then cooled to the room temperature to obtain a polymerized product. The FT-IR spectrum revealed that the polymerized product contained a phenylene sulfide unit as a structural unit and had an imide group derived from the copolymer component introduced therein. The obtained polyphenylene sulfide copolymer contained 22 mol% of the copolymer component.

[Chem 7]

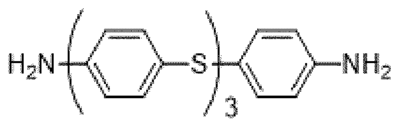

(V)

[PAS Copolymer-20]

Synthesis was made in the same manner as PAS copolymer-19 except that TPDA was changed to 1.79 g (5.0 mmol) of DSDA. The FT-IR spectrum revealed that the polymerized product contained a phenylene sulfide unit as a structural unit and had imide group and sulfonyl groups derived from the copolymer component introduced therein. The obtained polyphenylene sulfide copolymer contained 21 mol% of the copolymer component.

[Examples 7 to 12, 14 to 16 and 18, Reference Examples 1 to 6, 13 and 17, and Comparative Examples 2 and 3]

First, 16 bobbins with a bundle of carbon fibers (T700S-12K, Toray Industries, Inc.) wound therearound were prepared, from each of which bobbins the bundle of carbon fibers were continuously unwound out through a yarn guide. The bundle of carbon fibers that had been continuously unwound out was impregnated with a polyarylene sulfide copolymer in an impregnation die, which polyarylene sulfide copolymer was fed in a specific amount from a feeder filled therewith. The carbon fibers impregnated with the polyarylene sulfide copolymer in the impregnation die were subjected to continuous pultrusion using a drawing roll at a pultrusion rate of 1 m/min from the nozzle of the impregnation die. The temperature at which pultrusion of the carbon fiber is performed is referred to as processing temperature. The bundle of carbon fibers after pultrusion passed through a cooling roll to cool and solidify the polyarylene sulfide copolymer, and then was wound on a winder as a continuous fiber-reinforced polyarylene sulfide copolymer composite base material. The obtained fiber-reinforced polyarylene sulfide copolymer composite base material had a thickness of 0.3 mm, a width of 50 mm, and a volume fraction of reinforcing fibers arranged in one direction of 50%. The evaluation results of the obtained fiber-reinforced polyarylene sulfide copolymer composite base material are shown in Tables 1 to 3.

[Example 19] (Reference)

A polyarylene sulfide copolymer was fed to an extruder, melted and kneaded at 320°C, and then extruded into a film from the film die to obtain a resin film.

As a reinforcing fiber, a bundle of carbon fibers (T700S-12K, Toray Industries, Inc.) was cut into a fiber length of 15 mm, and fed into an airlaid machine to obtain a mat-shaped reinforcing fiber base material with mass per unit area of 100

g/m$^2$, and with the carbon fibers discontinuously dispersed.

The mat-shaped reinforcing fiber base material and the resin film were stacked into four layers such that the amount of the carbon fiber was 30% by volume, and then fed into a forming die heated to a die temperature (processing temperature) of 320°C. Then, the materials were heat-pressed at a pressure of 3 MPa for 10 minutes and cold-pressed at a pressure of 3 MPa to obtain a fiber-reinforced polyarylene sulfide copolymer composite base material with a thickness of 0.3 mm, and a volume fraction of 30%. The evaluation results of the obtained fiber-reinforced polyarylene sulfide copolymer composite base material are shown in Table 3.

[Example 20] (Reference)

A fiber-reinforced polyarylene sulfide copolymer composite base material with a thickness of 0.3 mm, a width of 50 mm, and a volume fraction of reinforcing fibers arranged in one direction of 50% was obtained in the same manner as in Example 1 except that a glass fiber roving (E-glass, fiber diameter: 10 μm) was used instead of the bundle of carbon fibers. The evaluation results of the obtained fiber-reinforced polyarylene sulfide copolymer composite base material are shown in Table 3.

[Comparative Example 1]

A fiber-reinforced polyarylene sulfide copolymer composite base material with a thickness of 0.3 mm, a width of 50 mm, and a volume fraction of reinforcing fibers arranged in one direction of 50% was obtained in the same manner as in Example 1 except that PPS-2 was used. The evaluation results of the obtained fiber-reinforced polyarylene sulfide copolymer composite base material are shown in Table 3.

[Table 1] (Examples 1 to 6 are Reference Examples)

| | | Example 1 | Example 2 | Example 3 | Example 4 | Example 5 | Example 6 | Example 7 | Example 8 | Example 9 |
|---|---|---|---|---|---|---|---|---|---|---|
| Raw materials | PAS copolymer | PAS copolymer -1 | PAS copolymer -2 | PAS copolymer -3 | PAS copolymer -4 | PAS copolymer -5 | PAS copolymer -6 | PAS copolymer -7 | PAS copolymer -8 | PAS copolymer -9 |
| | Carbon fiber (Volume%) | 50 | 50 | 50 | 50 | 50 | 50 | 50 | 50 | 50 |
| Base material | Mw | 24,000 | 28,000 | 23,000 | 23,000 | 26,000 | 21,000 | 32,000 | 60,000 | 66,000 |
| | Tg | 99°C | 99°C | 97°C | 98°C | 99°C | 95°C | 112°C | 122°C | 125°C |
| | Tm | 272°C | 264°C | 271°C | 268°C | 264°C | 260°C | 257°C | 248°C | 205°C |
| | Solvent resistance | A | A | A | A | A | A | A | A | A |
| | $T_{90}$ | 97°C | 97°C | 96°C | 97°C | 98°C | 91°C | 109°C | 119°C | 124°C |

[Table 2] (Examples 13 and 17 are Reference Examples)

| | | Example 10 | Example 11 | Example 12 | Example 13 | Example 14 | Example 15 | Example 16 | Example 17 | Example 18 |
|---|---|---|---|---|---|---|---|---|---|---|
| Raw materials | PAS copolymer | PAS copolymer -10 | PAS copolymer -11 | PAS copolymer -12 | PAS copolymer -13 | PAS copolymer -14 | PAS copolymer -15 | PAS copolymer -16 | PAS copolymer -17 | PAS copolymer -18 |
| | Carbon fiber (Volume%) | 50 | 50 | 50 | 50 | 50 | 50 | 50 | 50 | 50 |
| Base material | Mw | 55,000 | 61,000 | 59,000 | 68,000 | 60,000 | 76,000 | 61,000 | 23,000 | 50,000 |
| | Tg | 120°C | 126°C | 139°C | 123°C | 155°C | 127°C | 120°C | 98°C | 105°C |
| | Tm | 214°C | Undetectable | Undetectable | 253°C | Undetectable | Undetectable | 250°C | 270°C | 251°C |
| | Solvent resistance | A | A | A | A | A | A | A | A | A |
| | $T_{90}$ | 118°C | 122°C | 135°C | 118°C | 151°C | 124°C | 117°C | 95°C | 100°C |

[Table 3] (Examples 19 and 20 are Reference Examples)

| | | Example 19 | Example 20 | Comparative Example 1 | Comparative Example 2 | Comparative Example 3 |
|---|---|---|---|---|---|---|
| Raw materials | PAS copolymer | PAS copolymer -1 | PAS copolymer -1 | PPS-2 | PAS copolymer -19 | PAS copolymer -20 |
| | Carbon fiber (Volume%) | 30 | - | 50 | 50 | 50 |
| | Glass fiber (Volume%) | - | 50 | - | - | - |
| Base material | Mw | 24,000 | 24,000 | 73,000 | 65,000 | 63,000 |
| | Tg | 99°C | 99°C | 90°C | 195°C | 200°C |
| | Tm | 272°C | 272°C | 278°C | 206°C | 207°C |
| | Solvent resistance | A | A | A | C | C |
| | $T_{90}$ | 97°C | 97°C | 89°C | 185°C | 194°C |

As shown in Comparative Example 1 in Table 3, the fiber-reinforced resin composite base materials using polyphenylene sulfide without a copolymer component show $T_{90}$, indicative of maintenance of storage modulus, of lower than 90°C due to their low glass transition temperature, leading to decrease in the rigidity at high temperature. In addition, as shown in Comparative Examples 2 and 3, when the number average molecular weight (Mn) of the arylene sulfide units in the polyarylene sulfide copolymer is less than 1,000, the fiber-reinforced resin composite base material has poor chemical resistance. On the other hand, as shown in Examples and Reference Examples in Tables 1 to 3, the fiber-reinforced polyarylene sulfide copolymer composite base materials using a polyarylene sulfide copolymer can provide a base material that is excellent in rigidity at high temperature and chemical resistance.

[Industrial Availability]

The fiber-reinforced polyarylene sulfide copolymer composite base material obtained according to the present invention has excellent heat resistance, chemical resistance, flame retardancy, electrical properties, and mechanical properties, and can be used in various applications, including electric and electronic parts, parts for audio equipment, parts for household and office electric appliances, machine-related parts, optical equipment, precision machine-related parts, parts for plumbing, automobile- and vehicle-related parts, aerospace-related parts, and other applications.

## Claims

**1.** A fiber-reinforced polyarylene sulfide copolymer composite base material, comprising:

a continuous reinforcing fiber, or a reinforcing fiber base material with discontinuous reinforcing fibers dispersed therein; and
a polyarylene sulfide copolymer impregnated into the continuous reinforcing fiber or the reinforcing fiber base material;
wherein a glass transition temperature of the polyarylene sulfide copolymer is from 95°C to 190°C, wherein the glass transition temperature is measured using a differential scanning calorimeter;
wherein the polyarylene sulfide copolymer comprises arylene sulfide units having a number average molecular weight (Mn) of from 1,000 to 10,000, wherein the number average molecular weight is determined by size exclusion chromatography comprising a differential refractive index detector; and
wherein an amount of the arylene sulfide unit contained in the polyarylene sulfide copolymer is 50% by weight or more, wherein the amount is measured by the method of the description,
the polyarylene sulfide copolymer having at least one amide or imide linking group;
wherein the polyarylene sulfide copolymer is prepared by a method comprising:

(i) adding a sulfide compound having a reactive functional group to polyphenylene sulfide and heating the mixture to form an arylene sulfide prepolymer (A) having an amino group; and

(ii) mixing the arylene sulfide prepolymer (A) with a compound constituting the structural unit of the copolymer (B), and heating to obtain a polyarylene sulfide copolymer having an amide or an imide linking group, wherein the compound constituting the structural unit of the copolymer (B) is at least one or more compounds selected from the following formulae (a') to (k'):

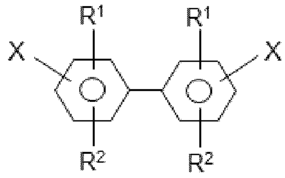
...(a')

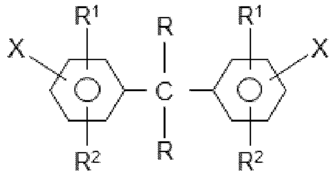
...(b')

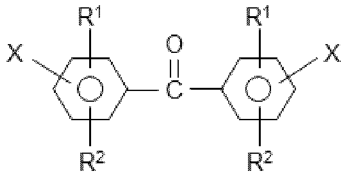
...(c')

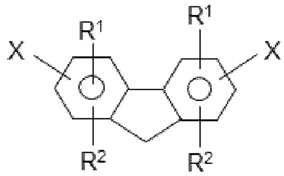
...(d')

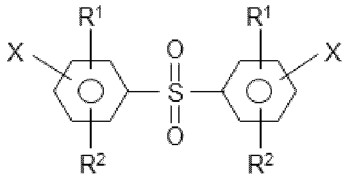
...(e')

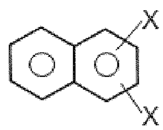
...(f')

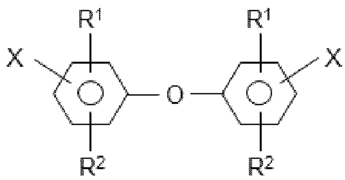
...(g')

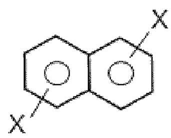
...(h')

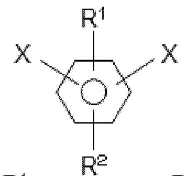
...(i')

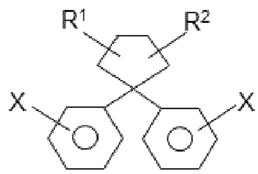
...(j')

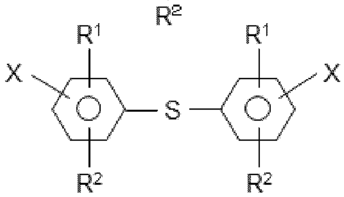
...(k')

,

wherein in the formulae, X is any one selected from hydroxyl, carboxyl, silanol, sulfo, amino, acid anhydride, acetamide, sulfonamide, cyano, isocyanate, aldehyde, acetyl, epoxy, and alkoxy silane; the aromatic ring in the compounds represented by the formulae (a') to (k') may be a bi- or tri-substituted group, and the two or more substituents X in a single substituted aromatic ring may be the same or different; R, $R^1$ and $R^2$, which are the same or different, each represent a substituent selected from hydrogen, $C_{1-12}$ alkyl, $C_{6-24}$ aryl, and halogen.

2. The fiber-reinforced polyarylene sulfide copolymer composite base material according to claim 1, wherein the polyarylene sulfide copolymer has a melting point of 300°C or lower, or has no melting point.

3. The fiber-reinforced polyarylene sulfide copolymer composite base material according to claim 1 or 2, wherein the

polyarylene sulfide copolymer has at least one structure selected from the following formulae (a) to (j):

[Chem 1]

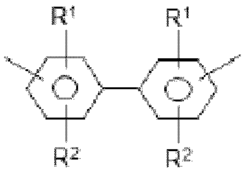
... (a)

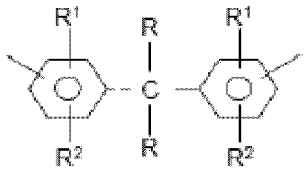
... (b)

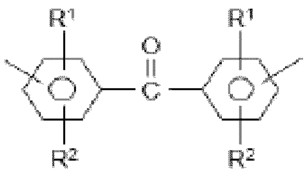
... (c)

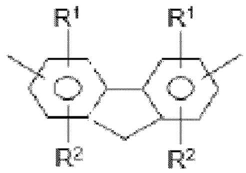
... (d)

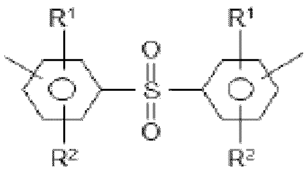
... (e)

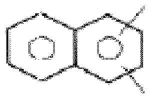
... (f)

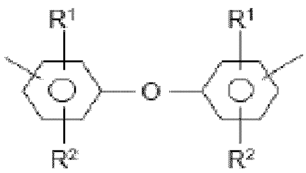
... (g)

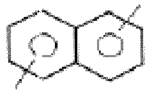
... (h)

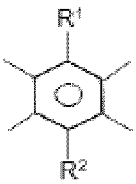
... (i)

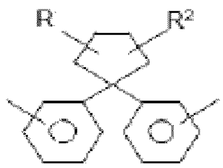
... (j)

wherein R, R1, and R2, which are the same or different, each represent a substituent selected from hydrogen, C1-12 alkyl, C6-24 aryl, and halogen.

4. The fiber-reinforced polyarylene sulfide copolymer composite base material according to claim 3, wherein the polyarylene sulfide copolymer has at least one structure selected from the formulae (a), (c), (d), (e), (i) and (j).

5. The fiber-reinforced polyarylene sulfide copolymer composite base material according to any one of claims 1 to 4, wherein the reinforcing fiber is continuously arranged in one direction, or is a discontinuous fiber with a number-average fiber length of from 3 to 100 mm.

6. The fiber-reinforced polyarylene sulfide copolymer composite base material according to any one of claims 1 to 5, wherein the reinforcing fiber comprises a carbon fiber; and wherein the composite base material contains 20 to 70% by volume of the reinforcing fiber.

7. The fiber-reinforced polyarylene sulfide copolymer composite base material according to any one of claims 1 to 6, wherein the number average molecular weight of the arylene sulfide units is 4,000 or less.

8. The fiber-reinforced polyarylene sulfide copolymer composite base material according to any one of claims 1 to 7, wherein the glass transition temperature is from 100 to 180°C.

9. A method of manufacturing the fiber-reinforced polyarylene sulfide copolymer composite base material according to any one of claims 1 to 8, comprising:

melting a polyarylene sulfide copolymer; and impregnating a continuous reinforcing fiber or a reinforcing fiber base material with discontinuous reinforcing fibers dispersed therein, with the molten polyarylene sulfide copolymer.

**10.** A molded article comprising the fiber-reinforced polyarylene sulfide copolymer composite base material according to any one of claims 1 to 8.

**Patentansprüche**

**1.** Faserverstärktes Polyarylensulfid-Copolymer-Verbundbasismaterial, umfassend:

eine kontinuierliche Verstärkungsfaser oder ein Verstärkungsfaser-Basismaterial mit darin verteilten diskontinuierlichen Verstärkungsfasern; und
ein Polyarylensulfid-Copolymer, das in die kontinuierliche Verstärkungsfaser oder das Verstärkungsfaser-Basismaterial imprägniert ist;
wobei eine Glasübergangstemperatur des Polyarylensulfid-Copolymers 95 °C bis 190 °C beträgt, wobei die Glasübergangstemperatur unter Verwendung eines dynamischen Differenzkalorimeters gemessen wird;
wobei das Polyarylensulfid-Copolymer Arylensulfideinheiten mit einem zahlenmittleren Molekulargewicht (Mn) von 1.000 bis 10.000 aufweist, wobei das zahlenmittlere Molekulargewicht durch Größenausschlusschromatographie, umfassend einen Differenzbrechungsindexdetektor, bestimmt wird; und
wobei eine Menge der Arylensulfideinheit, die in dem Polyarylensulfid-Copolymer enthalten ist, 50 Gew.-% oder mehr beträgt, wobei die Menge durch das Verfahren der Beschreibung gemessen wird,
wobei das Polyarylensulfid-Copolymer zumindest eine Amid- oder Imid-Linkergruppe aufweist;
wobei das Polyarylensulfid-Copolymer durch ein Verfahren hergestellt wird, das Folgendes umfasst:

(i) Zusetzen einer Sulfidverbindung, die eine reaktive funktionelle Gruppe aufweist, zu Polyphenylensulfid und Erhitzen des Gemischs, um ein Arylensulfid-Präpolymer (A) mit einer Aminogruppe zu bilden; und
(ii) Vermischen des Arylensulfid-Präpolymers (A) mit einer Verbindung, die die strukturelle Einheit des Copolymers (B) darstellt, und Erhitzen, um ein Polyarylensulfid-Copolymer mit einer Amid- oder Imid-Linkergruppe zu erhalten, wobei die Verbindung, die die strukturelle Einheit des Copolymers (B) darstellt, zumindest eine oder mehrere Verbindungen ist, die aus den folgenden Formeln (a') bis (k') ausgewählt sind:

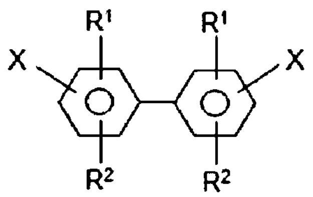
...(a')

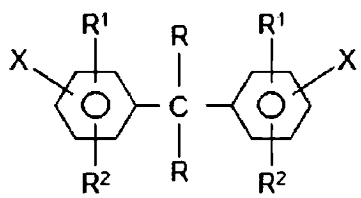
...(b')

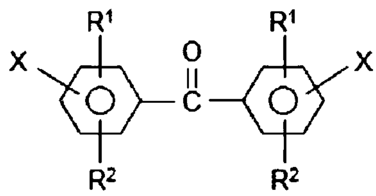
...(c')

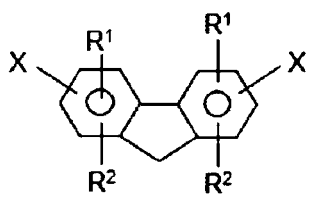
...(d')

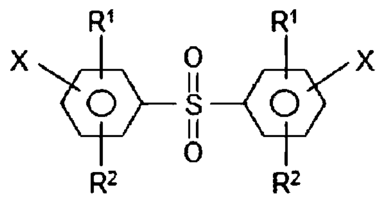
...(e')

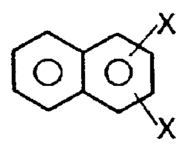
...(f')

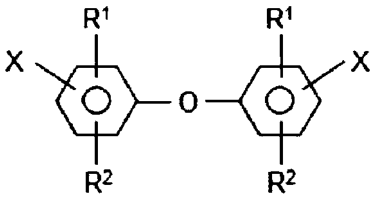 ...(g')

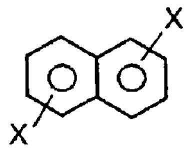 ...(h')

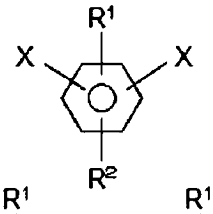 ...(i')

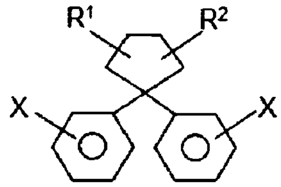 ...(j')

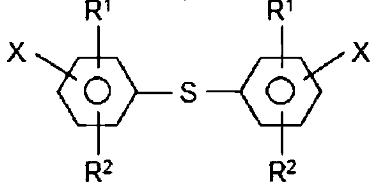 ...(k')

worin in den Formeln X ein beliebiges ist, das aus Hydroxyl, Carboxyl, Silanol, Sulfo, Amino, Säureanhydrid, Acetamid, Sulfonamid, Cyano, Isocyanat, Aldehyd, Acetyl, Epoxy und Alkoxysilan ausgewählt ist; wobei der aromatische Ring in den Verbindungen, die durch die Formeln (a') bis (k') dargestellt sind, eine bi- oder tri-substituierte Gruppe sein kann und wobei die zwei oder mehr Substituenten X in einem einzelnen substituierten aromatischen Ring gleich oder verschieden sein können; wobei R, $R^1$ und $R^2$, die gleich oder verschieden sind, jeweils für einen Substituenten stehen, der aus Wasserstoff, $C_{1-12}$-Alkyl, $C_{6-24}$-Aryl und Halogen ausgewählt ist.

2. Faserverstärktes Polyarylensulfid-Copolymer-Verbundbasismaterial nach Anspruch 1, wobei das Polyarylensulfid-Copolymer einen Schmelzpunkt bei 300 °C oder niedriger oder keinen Schmelzpunkt aufweist.

3. Faserverstärktes Polyarylensulfid-Copolymer-Verbundbasismaterial nach Anspruch 1 oder 2, wobei das Polyarylensulfid-Copolymer zumindest eine Struktur aufweist, die aus den folgenden Formeln (a) bis (j) ausgewählt ist:

[Chem. 1]

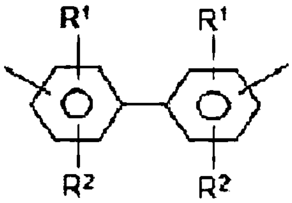

... (a)

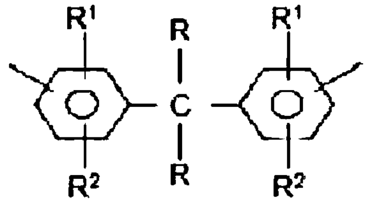

... (b)

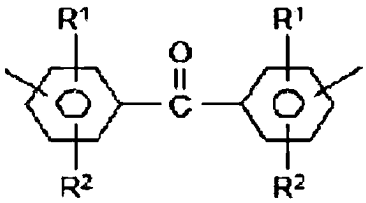

... (c)

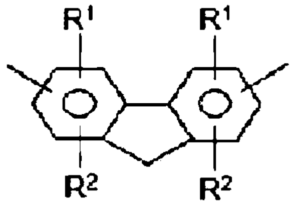

... (d)

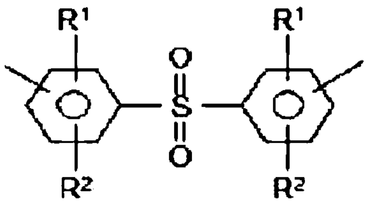

... (e)

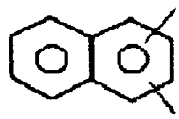

... (f)

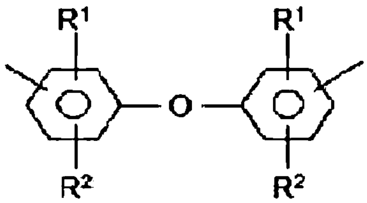

... (g)

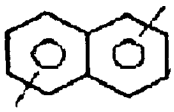

... (h)

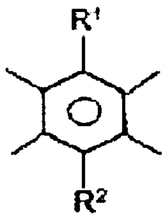

... (i)

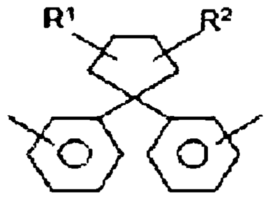

... (j)

worin R, $R^1$ und $R^2$, die gleich oder verschieden sind, jeweils für einen Substituenten stehen, der aus Wasserstoff, $C_{1-12}$-Alkyl, $C_{6-24}$-Aryl und Halogen ausgewählt ist.

**4.** Faserverstärktes Polyarylensulfid-Copolymer-Verbundbasismaterial nach Anspruch 3, wobei das Polyarylensulfid-Copolymer zumindest eine Struktur aufweist, die aus den Formeln (a), (c), (d), (e), (i) und (j) ausgewählt ist.

**5.** Faserverstärktes Polyarylensulfid-Copolymer-Verbundbasismaterial nach einem der Ansprüche 1 bis 4, wobei die Verstärkungsfaser kontinuierlich in eine Richtung angeordnet ist oder eine diskontinuierliche Verstärkungsfaser mit einer zahlenmittleren Faserlänge von 3 bis 100 mm ist.

**6.** Faserverstärktes Polyarylensulfid-Copolymer-Verbundbasismaterial nach einem der Ansprüche 1 bis 5, wobei die Verstärkungsfaser eine Kohlenstofffaser umfasst; und wobei das Verbundbasismaterial 20 bis 70 Vol.-% der Verstärkungsfaser enthält.

**7.** Faserverstärktes Polyarylensulfid-Copolymer-Verbundbasismaterial nach einem der Ansprüche 1 bis 6, wobei das zahlenmittlere Molekulargewicht der Arylensulfideinheiten 4.000 oder weniger beträgt.

**8.** Faserverstärktes Polyarylensulfid-Copolymer-Verbundbasismaterial nach einem der Ansprüche 1 bis 7, wobei die

Glasübergangstemperatur 100 bis 180 °C beträgt.

**9.** Verfahren zur Herstellung eines faserverstärkten Polyarylensulfid-Copolymer-Verbundbasismaterials nach einem der Ansprüche 1 bis 8, umfassend:
Schmelzen eines Polyarylensulfid-Copolymers; und Imprägnieren einer kontinuierlichen Verstärkungsfaser oder eines Verstärkungsfaser-Basismaterials mit darin verteilten diskontinuierlichen Verstärkungsfasern mit dem geschmolzenen Polyarylensulfid-Copolymer.

**10.** Formartikel, umfassend ein faserverstärktes Polyarylensulfid-Copolymer-Verbundbasismaterial nach einem der Ansprüche 1 bis 8.

## Revendications

**1.** Matériau de base composite de copolymère de sulfure de polyarylène renforcé par fibre, comprenant :

une fibre de renforcement continue ou un matériau de base de fibre de renforcement avec des fibres de renforcement discontinues dispersées en son sein ; et
un copolymère de sulfure de polyarylène imprégné dans la fibre de renforcement continue ou le matériau de base de fibre de renforcement ;
dans lequel une température de transition vitreuse du copolymère de sulfure de polyarylène est de 95°C à 190°C, dans lequel la température de transition vitreuse est mesurée à l'aide d'un calorimètre à balayage différentiel ;
dans lequel le copolymère de sulfure de polyarylène comprend des unités de sulfure d'arylène présentant un poids moléculaire moyen en nombre (Mn) de 1 000 à 10 000, dans lequel le poids moléculaire moyen en nombre est déterminé par chromatographie d'exclusion stérique comprenant un détecteur d'indice de réfraction différentiel ; et
dans lequel une quantité de l'unité de sulfure d'arylène contenue dans le copolymère de sulfure de polyarylène est de 50 % en poids ou plus, dans lequel la quantité est mesurée par le procédé de la description,
le copolymère de sulfure de polyarylène présentant au moins un groupe de liaison amide ou imide ;
dans lequel le copolymère de sulfure de polyarylène est préparé par un procédé comprenant les étapes consistant à :

(i) ajouter un composé de sulfure présentant un groupe fonctionnel réactif au poly(sulfure de phénylène) et chauffer le mélange pour former un prépolymère de sulfure d'arylène (A) présentant un groupe amino ; et
(ii) mélanger le prépolymère de sulfure d'arylène (A) avec un composé constituant l'unité structurelle du copolymère (B), et chauffer pour obtenir un copolymère de sulfure de polyarylène présentant un groupe de liaison amide ou imide, dans lequel le composé constituant l'unité structurelle du copolymère (B) est au moins un ou plusieurs composés choisis parmi les formules (a') à (k') suivantes :

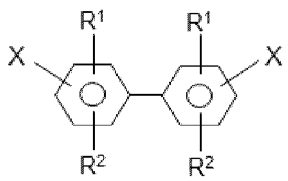
...(a')

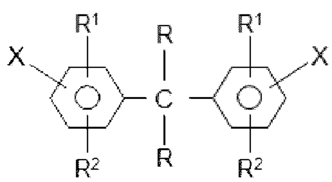
...(b')

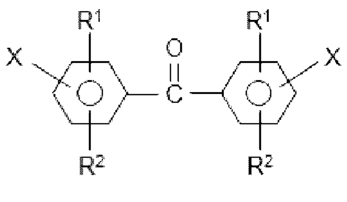
...(c')

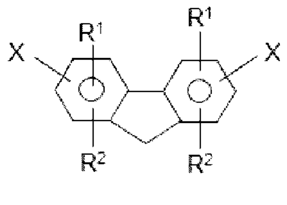
...(d')

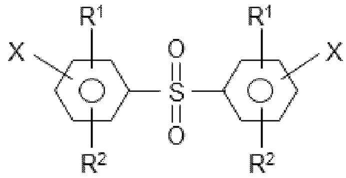
...(e')

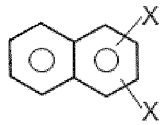
...(f')

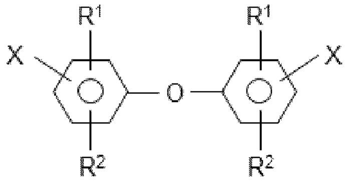
...(g')

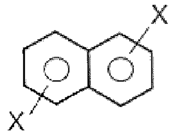
...(h')

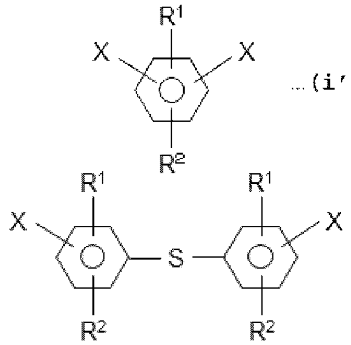
...(i')

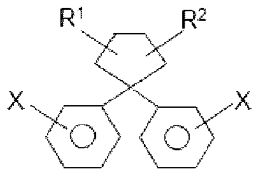
...(j')

...(k')

dans lequel, dans les formules, X est un quelconque choisi parmi hydroxyle, carboxyle, silanol, sulfo, amino, anhydride d'acide, acétamide, sulfonamide, cyano, isocyanate, aldéhyde, acétyle, époxy et alcoxy silane ; le cycle aromatique dans les composés représentés par les formules (a') à (k') peut être un groupe bi- ou tri-substitué, et les deux substituants X ou plus dans un cycle aromatique substitué unique peuvent être identiques ou différents ; R, $R^1$ et $R^2$, qui sont identiques ou différents, représentent chacun un substituant choisi parmi hydrogène, alkyle en $C_{1-12}$, aryle en $C_{6-24}$ et halogène.

2. Matériau de base composite de copolymère de sulfure de polyarylène renforcé par fibre selon la revendication 1, dans lequel le copolymère de sulfure de polyarylène présente un point de fusion de 300°C ou moins, ou ne présente pas de point de fusion.

3. Matériau de base composite à base de copolymère de sulfure de polyarylène renforcé par fibre selon la revendication 1 ou 2, dans lequel le copolymère de sulfure de polyarylène présente au moins une structure choisie parmi les formules (a) à (j) suivantes :

[Chem 1]

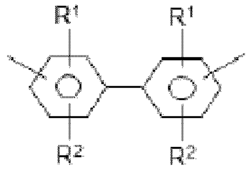 ...(a)

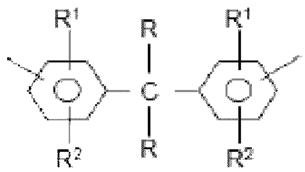 ...(b)

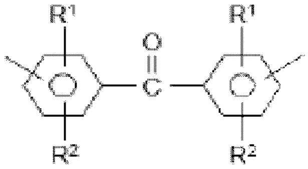 ...(c)

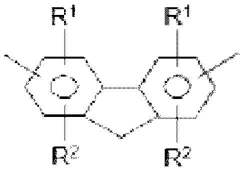 ...(d)

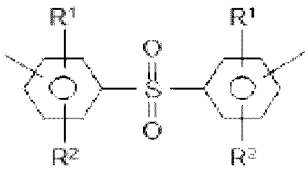 ...(e)

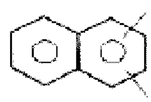 ...(f)

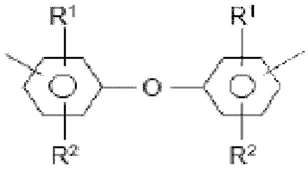 ...(g)

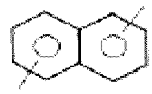 ...(h)

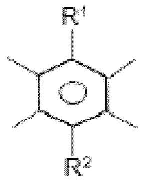 ...(i)

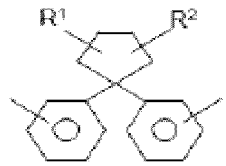 ...(j)

dans lequel R, $R^1$ et $R^2$, qui sont identiques ou différents, représentent chacun un substituant choisi parmi hydrogène, alkyle en $C_{1-12}$, aryle en $C_{6-24}$ et halogène.

4. Matériau de base composite de copolymère de sulfure de polyarylène renforcé par fibre selon la revendication 3, dans lequel le copolymère de sulfure de polyarylène présente au moins une structure choisie parmi les formules (a), (c), (d), (e), (i) et (j).

5. Matériau de base composite de copolymère de sulfure de polyarylène renforcé par fibre selon l'une quelconque des revendications 1 à 4, dans lequel la fibre de renforcement est agencée en continu dans une direction, ou est une fibre discontinue avec une longueur de fibre moyenne en nombre de 3 à 100 mm.

6. Matériau de base composite de copolymère de sulfure de polyarylène renforcé par fibre selon l'une quelconque des revendications 1 à 5, dans lequel la fibre de renforcement comprend une fibre de carbone ; et dans lequel le matériau de base composite contient de 20 à 70 % en volume de la fibre de renforcement.

7. Matériau de base composite de copolymère de sulfure de polyarylène renforcé par fibre selon l'une quelconque des revendications 1 à 6, dans lequel le poids moléculaire moyen en nombre des unités de sulfure d'arylène est de 4 000 ou moins.

8. Matériau de base composite de copolymère de sulfure de polyarylène renforcé par fibre selon l'une quelconque des revendications 1 à 7, dans lequel la température de transition vitreuse est de 100 à 180°C.

9. Procédé de fabrication du matériau de base composite copolymère de sulfure de polyarylène renforcé par fibre selon l'une quelconque des revendications 1 à 8, comprenant les étapes consistant à :
faire fondre un copolymère de sulfure de polyarylène ; et imprégner une fibre de renforcement continue ou un matériau

de base de fibre de renforcement avec des fibres de renforcement discontinues dispersées en son sein, avec le copolymère de sulfure de polyarylène fondu.

**10.** Article moulé comprenant le matériau de base composite de copolymère de sulfure de polyarylène renforcé par fibre selon l'une quelconque des revendications 1 à 8.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017132839 A, Claims
- JP H2133428 A, Claims
- JP H598007 A, Claims
- JP S6284124 A, Claims
- JP S6445433 A, Claims
- JP 2016225851 A
- EP 0213573 A2
- US 4769424 A
- US 4716216 A